# FASCICULE DE BREVET EUROPEEN

(11) **EP 3 027 093 B1**
(45) Date de publication et mention de la délivrance du brevet: **11.09.2019**
(21) Numéro de dépôt: 14745134.8
(22) Date de dépôt: 30.07.2014
(51) Int. Cl.: A47J 31/36, A47J 31/44

(54) **SYSTÈME DE PRODUCTION DE BOISSONS PAR INFUSION**
SYSTEM ZUR HERSTELLUNG VON GETRÄNKEN DURCH AUFGIESSEN
SYSTEM FOR PRODUCING BEVERAGES BY INFUSION

(30) Priorité: 30.07.2013 FR 1357545
(43) Date de publication de la demande: 08.06.2016
(73) Titulaire: Compagnie Méditerranéenne des Cafés, 06510 Carros (FR)
(72) Inventeur: BLANC, Jean-Pierre, 06000 Nice (FR); THIBAULT, Bertrand, 06000 Nice (FR)
(74) Mandataire: Hautier, Nicolas
(86) Numéro de dépôt international: PCT/EP2014/066439
(87) Numéro de publication internationale: WO 2015/014916

(56) Documents cités:
- WO-A1-2010/009753
- WO-A1-2011/147792
- WO-A2-2008/012316
- FR-A1- 2 916 336
- FR-A1- 2 976 779

## Description

La présente invention concerne un dispositif de production de boissons par infusion d'un produit sous forme de dose.

Elle trouve plus particulièrement son application dans le domaine des machines à café de type EXPRESSO. Elle pourra également s'appliquer à la production de boissons à partir d'autres matières telles que le thé.

De nombreuses machines à café utilisent désormais des doses également désignées capsules ou conditionnements qui forment un ensemble relativement compact de produit à infuser.

De manière générale, les machines de préparation de boissons comprennent une chambre d'infusion destinée à recevoir de l'eau chaude et une dose de produit à infuser. La fiabilité de l'insertion de la dose et de son retrait hors de la chambre d'infusion pose de nombreuses difficultés.

Les documents WO2011147792 et FR2916336 proposent des machines dont la fiabilité est particulièrement élevée. Cette fiabilité élevée résulte essentiellement d'un fonctionnement séquentiel de la machine reposant sur un nombre de pièces et une cinématique bien spécifiques.

Dans un contexte où les consommateurs recherchent une qualité gustative toujours plus élevée, il convient d'adapter avec précision les doses de produit à infuser aux conditions d'infusion. En effet, la qualité de la boisson obtenue dans la tasse, par exemple le café, requiert que les paramètres d'infusion tels que la pression, la température, le volume d'eau soient adaptés à des nombreux paramètres liés à la dose tels que : la variété du café, la granularité de la mouture, le volume de café etc.

Les torréfacteurs conçoivent donc leurs doses pour des machines spécifiques à ces doses.

Des doses particulières ont ainsi été développées et sont destinées à être utilisées avec un certain type de machine.

En pratique il s'avère que des utilisateurs utilisent avec leur machine des doses non adaptées.

Il s'ensuit que la qualité du café obtenu est bien moindre, ce qui peut détourner l'utilisateur de cette machine alors même qu'elle pourrait parfaitement répondre à ses attentes si elle était utilisée avec les doses adéquates.

De manière plus préjudiciable, une dose non adaptée à la machine dans laquelle elle est insérée peut ne pas résister aux conditions d'infusion. Sous l'effet de la pression et/ou de la température la dose non adaptée peut rompre lors de l'infusion, conduisant le plus souvent à un endommagement de la machine. Dans certains cas, cette rupture peut entraîner des fuites de fluide très chaud et sous pression ce qui pose inévitablement des problèmes de sécurité pour les utilisateurs.

Il existe donc un besoin consistant à empêcher d'utiliser dans un type particulier de machine des doses non spécifiquement conçues pour ce type particulier de machine.

L'invention a pour objectif d'atteindre l'un au moins de ces objectifs. A cet effet, on prévoit selon l'invention un système de production de boissons selon la revendication 1.

Ainsi, si la dose présente un pourtour ou une forme qui entre au contact de la butée axiale, cette dernière s'oppose au coulissement de cette dose. Par conséquent, si l'utilisateur insère dans la machine une telle dose non prévue pour cette machine, le système bloque la dose et empêche son insertion dans la chambre d'infusion. En revanche, si la dose ne présente pas un pourtour ou une forme qui entre au contact de la butée axiale, la butée axiale ne s'oppose pas au coulissement de cette dose. Le système autorise donc l'emploi de cette dose avec la machine.

Par ailleurs, la solution de l'invention permet de n'avoir à modifier que les zones de soutien et la butée afin de définir les machines compatibles avec un type de doses et celles qui ne le sont pas. Cela représente ainsi un avantage important en termes de coût de conception et de fabrication.

De manière également facultative, l'invention comprend en outre au moins l'une quelconque des caractéristiques optionnelles suivantes :
Avantageusement, la butée axiale est agencée pour entrer au contact d'une dose dont le pourtour présenterait une portion formant saillie vers le bas au-delà d'un plan horizontal passant par la zone de soutien lorsque la dose est dans l'ensemble de réception, bloquant ainsi le coulissement d'une telle dose par rapport à la première pièce. Ainsi, si la dose présente une portion formant une saillie vers le bas au-delà de la zone de soutien, la butée axiale s'oppose au coulissement de cette dose. Par conséquent, si l'utilisateur insère dans la machine une dose non prévue pour cette machine, le système bloque la dose et empêche son insertion dans la chambre d'infusion. En revanche, si la dose ne présente pas de portion formant une saillie vers le bas au-delà de la zone de soutien, la butée axiale ne s'oppose pas au coulissement de cette dose. Le système autorise donc l'emploi de cette dose avec la machine.

Avantageusement, la au moins une butée axiale est entièrement disposée en dessous de la zone de soutien selon une projection sur un plan vertical perpendiculaire à l'axe de ladite translation. Elle ne s'étend pas au dessus du plan défini par la zone de soutien. Ainsi, elle ne peut pas bloquer une dose qui ne s'étend pas en dessous de la zone de soutien.

Avantageusement, la butée est accessible depuis la position de réception ou depuis toute position située sur la course en translation avant le positionnement de la dose dans la position d'infusion.

Selon un mode de réalisation, le système comprend au moins une ouverture portée par la première pièce et située verticalement sous la zone de soutien, ladite ouverture donnant accès à la butée axiale. De manière avantageuse et optionnelle ladite ouverture est conformée pour donner un accès vertical à la butée axiale.

Selon un mode de réalisation, le système comprend au moins une ouverture portée par la première pièce et située verticalement sous la zone de soutien, ladite butée axiale étant formée par un contour de l'ouverture.

Selon un mode de réalisation, le système comprend au moins un volume ouvert situé verticalement sous la zone de soutien, le volume ouvert étant conformé pour permettre l'accès à la butée axiale depuis la zone de soutien.

Avantageusement, le système comprend au moins un volume ouvert situé verticalement sous la zone de soutien et de préférence adjacent à la zone de soutien. De préférence, la butée axiale est située dans le volume ouvert. De préférence, le volume ouvert est conformé pour pouvoir être pénétré par une dose non adaptée au système dont le pourtour présente une portion saillante vers le bas lorsque la dose est dans l'ensemble de réception.

De préférence les première et deuxième pièces sont situées en amont d'une chambre d'infusion de la dose et sont configurées pour être atteintes par la dose avant que cette dernière ne soit enfermée dans la chambre d'infusion.

Le volume ouvert est accessible depuis l'ensemble de réception.

Avantageusement, le volume ouvert est formé par une ouverture définie par un contour. Ainsi, le système s'oppose au coulissement d'un type de doses dont une partie pénètre dans l'ouverture et permet le coulissement des doses ne pénétrant pas dans l'ouverture.

Avantageusement, la butée axiale est formée par une portion au moins du contour. L'ouverture forme une fente. De préférence la butée axiale est formée par un contour de la fente.

Avantageusement, la au moins une zone de soutien forme une butée verticale, bloquant le déplacement de la dose sous l'effet de son poids.

La au moins une zone de soutien est configurée pour retenir la dose en amont de la chambre d'infusion lorsque cette zone de soutien est positionnée au droit de l'ouverture permettant l'accès à la chambre d'infusion depuis l'amont de la chambre d'infusion. La zone de soutien empêche ainsi que la dose ne tombe dans la chambre.

De préférence le système comporte au moins deux zones de soutien.

Avantageusement, les deux zones de soutien définissent un plan sensiblement horizontal ainsi qu'une première et une deuxième portions d'espace situées respectivement au-dessus et en dessous du plan selon une direction verticale et la butée axiale est disposée dans la deuxième portion d'espace de manière à entrer au contact d'une portion de dose pénétrant dans cette deuxième portion d'espace.

De préférence la distance entre ledit plan et la butée axiale est comprise entre 0,5 mm et 5 mm.

Avantageusement, les deux zones de soutien forment deux parties en saillie s'étendant au-dessus d'un profil portant la butée axiale selon une direction verticale.

Avantageusement, le système est configuré de manière à ce qu'en fin de coulissement, la première pièce soit escamotée, c'est-à-dire disposée, au moins en partie sous la deuxième pièce selon une direction verticale de manière à ce que la dose puisse se déplacer sous l'effet de la gravité.

De préférence le système comporte une pompe permettant d'alimenter en fluide la chambre d'infusion, et/ou un actionneur permettant de déplacer mutuellement deux demi chambres formant la chambre d'infusion et comportant des moyens d'asservissement (80) agencés de manière à empêcher le fonctionnement de la pompe si la première pièce empêche le coulissement de la dose.

Avantageusement, les première et deuxième pièces sont respectivement mobile et fixe par rapport à un bâti du système.

Avantageusement, les première et deuxième pièces sont respectivement fixe et mobile par rapport à un bâti du système.

Avantageusement, la première pièce forme des moyens de fermeture amont ou est solidaire de moyens de fermeture amont, les moyens de fermeture amont étant agencés de manière à sélectivement empêcher ou à autoriser l'entrée de la dose dans la chambre d'infusion en fonction de la position relative de la première pièce par rapport à la deuxième pièce. Ainsi, la première pièce porte la butée axiale et les zones de soutien. Afin de rendre une machine compatible avec un type de dose et non compatible avec un autre type de dose, il suffit alors de modifier la configuration de la première pièce. Le reste du groupe d'infusion n'a pas besoin d'être modifié, ce qui représente un avantage considérable en termes de coût de conception et de fabrication.

De préférence, le système comprend une chambre d'infusion destinée à recevoir une dose, la chambre étant définie par au moins une première et une deuxième portions de chambre, les portions étant agencées pour être mutuellement éloignées ou rapprochées afin de respectivement fermer ou ouvrir la chambre,
- un dispositif de fermeture comprenant : les moyens de fermeture amont solidaires de la première pièce ; des moyens de fermeture aval agencés de manière à sélectivement empêcher ou à autoriser la sortie de la dose hors de la chambre ;
- le dispositif de fermeture étant agencé pour passer alternativement :
   o de ladite première position, le dispositif de fermeture étant agencé pour que dans ladite première position : les moyens de fermeture amont empêchent l'entrée de la dose dans la chambre ; les moyens de fermeture aval autorisent la sortie de la dose hors de la chambre ;
   o à une deuxième position dans laquelle : les moyens de fermeture amont autorisent l'entrée de la dose dans la chambre en fin de coulissement ; les moyens de fermeture aval permettent la réception de la dose introduite dans la chambre et empêchent la sortie de cette dernière hors de la chambre.

Avantageusement, les moyens de fermeture amont et les moyens de fermeture aval sont solidaires.

De préférence, la première pièce présente une portion circulaire. De préférence, la deuxième pièce est portée par les moyens de guidage ou par un bâti du système

Avantageusement, le système comprend des moyens de guidage agencés de manière à guider la dose en vue de sa réception sur la première pièce et à la maintenir en position jusqu'en fin de coulissement et les moyens d'appui de la deuxième pièce sont portés par les moyens de guidage.

Avantageusement, les moyens d'appui sont configurés pour prendre appui sur une zone de la dose contenant le produit à infuser. Alternativement, les moyens d'appui sont configurés pour prendre appui sur un pourtour de la dose.

Avantageusement, les moyens d'appui sont formés au moins en partie par une face interne d'une trémie formant un guide pour la dose lors de sa réception sur la première pièce.

Avantageusement, le système étant agencé de manière à ce que :
- dans une première position relative des moyens de fermeture amont par rapport aux moyens d'appui, les moyens de fermeture amont forment une butée verticale empêchant une dose insérée dans la machine de se déplacer sous l'effet de la gravité ;
- dans une deuxième position relative des moyens de fermeture amont par rapport aux moyens d'appui, moyens d'appui la butée verticale n'est pas située au doit l'empêchant de pénétrer dans la chambre de préférence sous l'effet de la gravité.

Selon un premier mode de réalisation, la première pièce est configurée pour assurer à elle seule la réception de la dose. Alternativement, la première pièce est configurée pour ne pas assurer à elle seule la réception de la dose. Elle forme par exemple une surface inclinée.

Avantageusement, la surface de soutien est continue ou discontinue. Elle est ponctuelle ou continue.

Selon un autre mode de réalisation, l'invention porte sur un ensemble selon la revendication 11.

Ainsi, si la dose et la butée axiale sont mutuellement agencées pour que la butée axiale n'entre pas au contact du pourtour de la dose lorsque la dose coulisse, la dose passe au-delà de la butée et peut venir se positionner dans la position d'infusion. En revanche, si la dose n'est pas compatible avec le système, c'est-à-dire si la dose et la butée axiale ne sont pas mutuellement pour que la butée axiale n'entre pas au contact du pourtour de la dose lorsque la dose coulisse, la dose bute sur la butée axiale et ne peut pas se positionner dans la position d'infusion. Le système est alors bloqué et la boisson ne peut pas être préparée.

De manière également facultative, l'invention comprend en outre au moins l'une quelconque des caractéristiques optionnelles suivantes :
Avantageusement, la butée axiale et le pourtour de la dose présentent des formes complémentaires et agencées de manière à ce que la butée axiale n'entre pas au contact de la dose lorsque la dose coulisse sur la première pièce.

Avantageusement, la butée axiale est disposée en dessous de ladite au moins une zone de soutien selon une projection sur un plan vertical perpendiculaire à l'axe de ladite translation.

Avantageusement, la première pièce comprend au moins deux zones de soutien et la portion du pourtour de la dose destinée à être positionnée entre les deux zones de soutien est rectiligne ou concave.

Avantageusement, la première pièce présente deux zones de soutien, une ouverture située entre les deux zones de soutien, une partie d'un contour de l'ouverture formant la butée axiale. La dose présente une armature définissant une portion au moins de son pourtour et configurée pour prendre appui sur les deux zones de soutien et l'armature présente une forme configurée pour ne pas pénétrer dans l'ouverture lorsqu'elle prend appui sur les deux zones de soutien.

Ainsi, une armature définissant le pourtour d'une telle dose n'entrerait pas au contact de la butée axiale lors de son coulissement. En revanche une dose dont le pourtour présente une portion convexe ou formant saillie vers le bas au-delà d'un plan horizontal passant par la zone de soutien lorsque la dose est dans l'ensemble de réception, serait bloquée.

Avantageusement, la dose présente un pourtour de forme polygonale et de préférence carré.

Avantageusement, la dose comporte un premier revêtement et un deuxième revêtement assemblés à leur périphérie dans un plan de joint de sorte à délimiter un volume de réception du produit à infuser, le pourtour est sensiblement carré, la longueur d'un côté étant comprise entre 5 cm et 5,5 cm et présente un congé de raccordement en arc de cercle à chacun de ses coins.

Avantageusement, la course du coulissement présente une longueur supérieure à la moitié de l'épaisseur de la dose, et de préférence supérieure à l'épaisseur de la dose, l'épaisseur de la dose étant prise selon une direction parallèle au coulissement.

De préférence, le système est configuré pour que la dose se positionne sur la première pièce sous l'effet de la gravité. Cela permet de rendre le fonctionnement particulièrement fiable. De préférence, le système est configuré pour qu'en fin de coulissement la dose se positionne dans la position d'infusion sous l'effet de la gravité. Cela permet de rendre le fonctionnement particulièrement fiable.

Avantageusement, la dose comprend une nappe filtrante dont une paroi interne délimite un espace fermé de stockage d'un produit à infuser, une armature apte à maintenir la nappe filtrante lors d'un appui sur un support.

De préférence, l'armature s'étend principalement dans un plan. La dose est de préférence symétrique par rapport à ce plan.

De préférence, l'armature est formée en plastique ou en métal et de préférence en carton.

De préférence, l'armature présente un pourtour polygonal. Un tel pourtour permet de ne pas former saillie en dessous des zones de soutien tout en étant simple à fabriquer.

De préférence, l'armature présente un pourtour carré, ce qui permet une insertion de la dose quelle que soit sa position angulaire autour de l'axe de coulissement.

De préférence, l'espace fermé de stockage présente un pourtour circulaire, ce qui permet un remplissage plus facile et plus homogène du produit à infuser.

Selon un autre mode de réalisation de l'invention, le système comprend une première et une deuxième pièces présentant une mobilité relative en translation et définissant en partie au moins un ensemble de réception destiné à réceptionner la dose avant son positionnement dans une position d'infusion, le système étant agencé de manière à ce que :
- dans une première position relative des première et deuxième pièces, la première pièce forme une surface de réception pour une dose introduite dans la machine, de préférence sous l'effet de la gravité,
- lors de la translation relative des première et deuxième pièces, la deuxième pièce forme des moyens d'appui sur la dose pour provoquer le coulissement de la dose sur la première pièce de manière à permettre le positionnement de la dose dans la position d'infusion,
- la première pièce comportant au moins une zone de soutien configurée pour entrer au contact de la dose de manière à pour soutenir le pourtour de la dose de manière à s'opposer au moins en partie au poids de la dose dans une première position relative des première et deuxième pièces. Le système est configuré pour que la dose coulisse sur cette au moins une zone de soutien lors de la translation relative des première et deuxième pièces. La première pièce comporte également au moins une butée axiale, solidaire de la première pièce, disposée en dessous de ladite au moins zone de soutien selon une projection sur un plan vertical perpendiculaire à l'axe de ladite translation.

De manière également facultative, l'invention comprend en outre au moins l'une quelconque des caractéristiques optionnelles suivantes :
- Le système comprend des moyens d'alimentation de la chambre et au moins un conduit d'alimentation conformé pour alimenter la chambre en fluide à infuser. De manière avantageuse, la première portion de chambre, solidaire de l'actionneur, comporte en partie au moins ledit conduit d'alimentation.
- l'autre demi-chambre, celle ne portant pas ledit conduit d'alimentation est fixe. Elle est fixe par rapport à un bâti de la machine. La cinématique de la machine est ainsi grandement simplifiée, fiable et robuste. En outre, l'actionnement de la chambre ainsi que le dispositif de fermeture sont logés dans un espace réduit.

- Avantageusement, les moyens de fermeture amont et les moyens de fermeture aval sont solidaires. La cinématique du système est ainsi simplifiée et le système est rendu plus robuste et fiable. En particulier, les risques de mauvais positionnement des moyens de fermeture amont par rapport aux moyens de fermeture aval sont réduits. De préférence, le dispositif de fermeture est distinct des première et deuxième portions de chambre. Il constitue une unique pièce portant les moyens de fermeture amont et les moyens de fermeture aval.
- Le vérin et le conduit d'alimentation sont disposés du même côté de la chambre d'infusion.
- Le vérin comprend un piston et un cylindre définissant avec le piston une chambre de poussée et des moyens de rappel et est agencé de sorte que l'introduction d'un fluide sous pression dans la chambre de poussée provoque le déploiement du vérin et de sorte que les moyens de rappel tendent à rétracter le piston.
- Le piston comporte un passage en communication fluidique avec le conduit d'alimentation de la première portion d'une part et avec un canal d'alimentation d'autre part destiné à être connecté à une chaudière.
- Le cylindre comporte des moyens d'emmanchement solidaires du cylindre, s'étendant dans la chambre de poussée et conformés pour coulisser à l'intérieur du piston et logeant le canal d'alimentation. Ainsi, le canal d'alimentation est pratiqué dans les moyens d'emmanchement.
- Le système comprend une face de réception configurée pour recevoir un récipient pour récupérer la boisson infusée, la deuxième portion étant disposée entre la chambre d'infusion et la face de réception. De préférence, la chambre d'infusion comporte deux portions de chambre, la première étant mobile et la deuxième étant fixe. La deuxième portion de chambre est solidaire d'un bâti du système. La deuxième portion de chambre est réalisée dans un matériau thermiquement isolant, de préférence en plastique.
- Les moyens de fermeture amont sont solidaires des moyens de fermeture aval.
- Le système comprend des moyens de guidage agencés de manière à guider la dose en vue de son introduction dans la chambre et à la maintenir au droit de la chambre lors de l'effacement des moyens de fermeture amont, les moyens de guidage étant solidaires du bâti de la machine. Ainsi, avec le système selon l'invention les moyens de guidage ne sont pas mobiles. La complexité du système est réduite ce qui améliore encore la fiabilité du système. Cette simplification tend également à réduire les coûts de fabrication et de maintenance.
- Le système comprend une trappe définissant une ouverture disposée en amont des moyens de fermeture amont et le dispositif de fermeture comprend des moyens d'obstruction agencés de manière à : laisser libre l'ouverture de la trappe lorsque le dispositif de fermeture est disposé dans la première position et à obstruer l'ouverture de la trappe lorsque le dispositif de fermeture est disposé dans la deuxième position.

D'autres caractéristiques, buts et avantages de la présente invention apparaîtront à la lecture de la description détaillée qui va suivre et au regard des dessins annexés donnés à titre d'exemples non limitatifs et sur lesquels :
- les figures 1 à 10 sont des vues en coupe longitudinale du système de la figure 1 représentant diverses phases du procédé de production lors du fonctionnement,
- les figures 11 et 12 sont des vues en perspective respectivement de face et de dos d'une pièce formant moyens de fermeture selon un exemple particulier de l'invention,
- la figure 13 représente le coulissement de la bague illustrée en figure 11 et 12 sur des moyens de guidage,
- les figures 14a, 15a, 16a représentent un exemple de système selon l'invention dans lequel est insérée une dose adaptée à ce système,
- les figures 14b, 15b, 16b représentent le système des figures 14a, 15a, 16a dans lequel est insérée une dose non adaptée à ce système,
- la figure 17 représente une vue de perspective et en coupe du système des figures 14a, 15a, 16a dans lequel est insérée une dose non adaptée,
- les figures 18a à 18d illustrent quelques étapes du déplacement d'une dose adaptée dans un système selon l'invention, ces étapes étant vues en coupe,
- les figures 19a à 19d illustrent quelques étapes du déplacement d'une dose adaptée dans un système selon l'invention, ces étapes étant vues en perspective et en coupe.

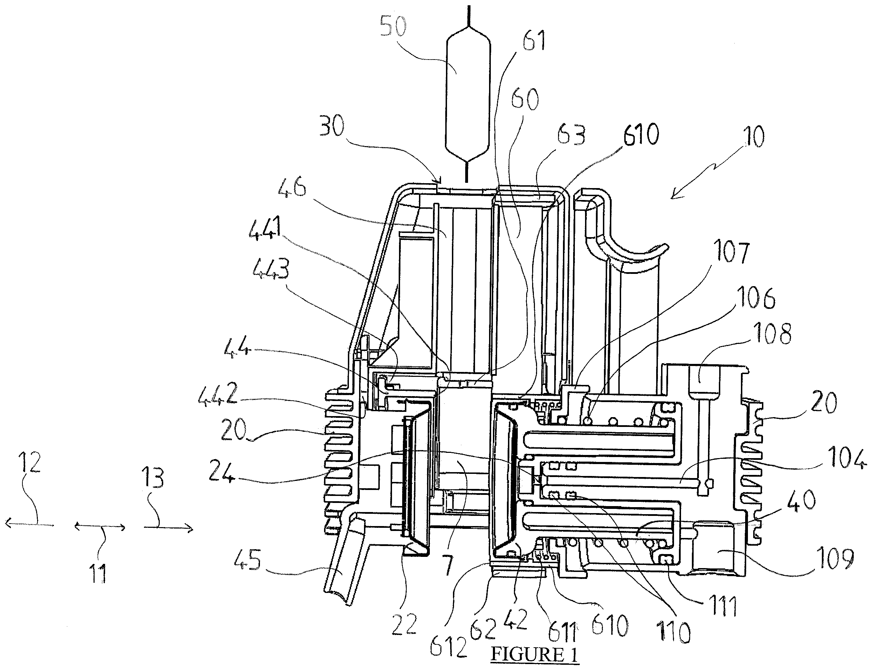

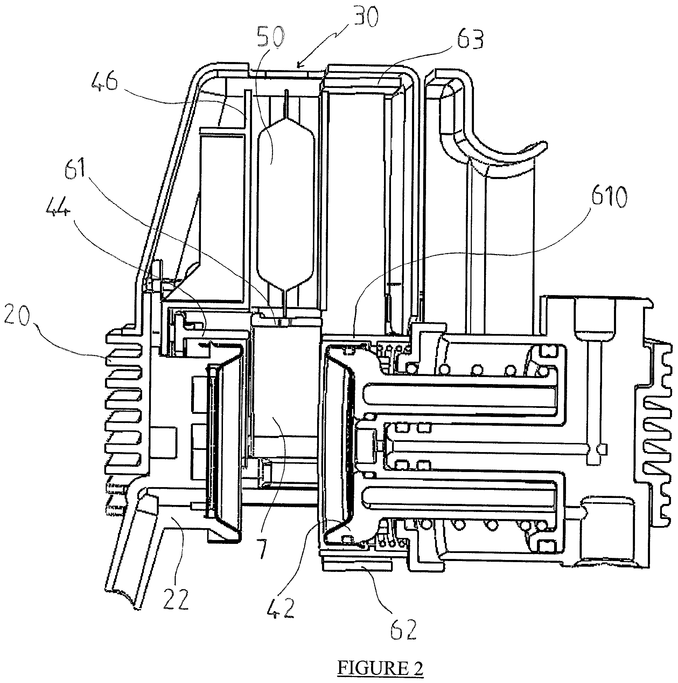

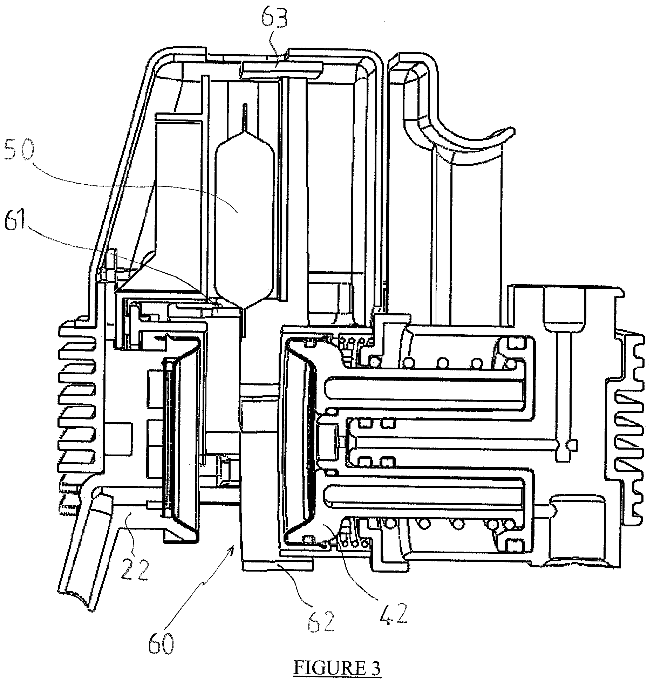

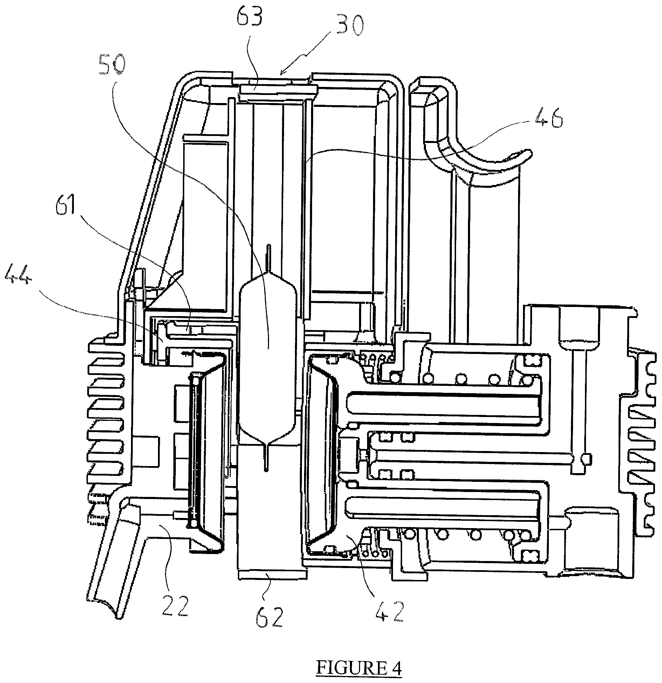

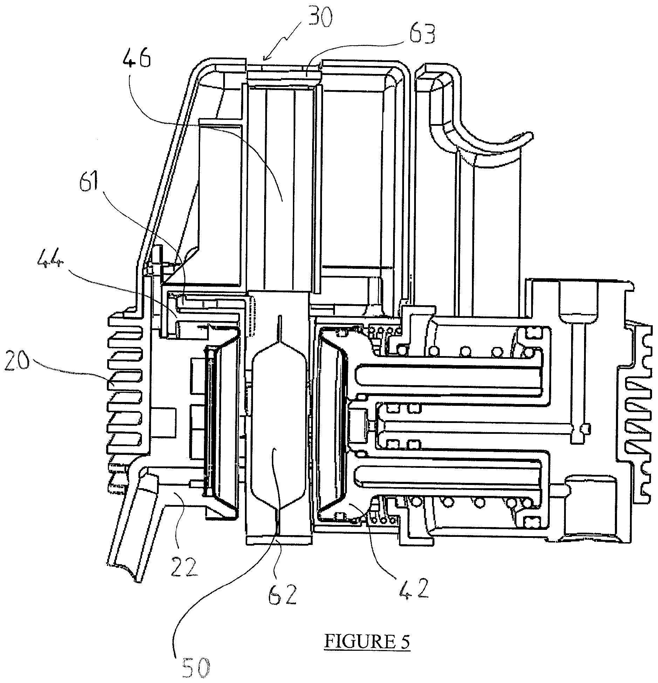

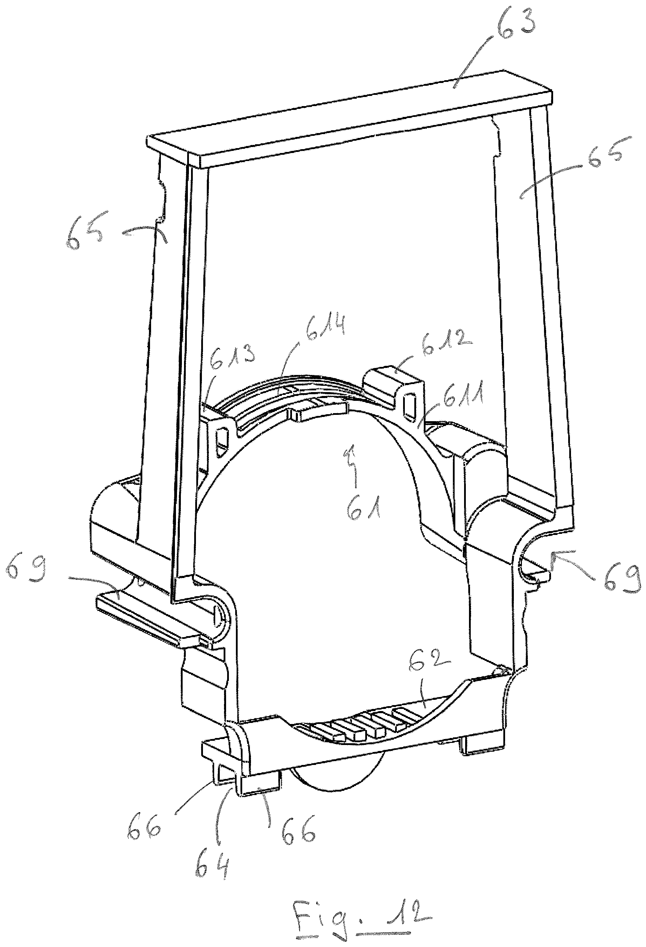

En référence aux figures 1 à 14, on a illustré un système 10 de préparation de boisson selon l'invention.

On qualifiera d'amont et d'aval les portions d'espace respectivement disposées avant et après un point considéré relativement au trajet normal d'une dose dans la machine lors d'un cycle de préparation d'une boisson.

Dans le cadre de la présente invention, on peut utiliser des doses 50 enfermant un produit à infuser, par exemple la mouture de café. Le produit à infuser est enfermé dans un volume 51 intérieur fermé de la dose. Le volume intérieur est configuré pour pouvoir être traversé par un liquide tel que l'eau lors de l'infusion. Il est par exemple délimité par des nappes filtrantes ou par une paroi en un matériau étanche mais rendue filtrante par perforation. La dose comprend un pourtour 52. Préférentiellement, le volume 51 fermé enfermant le produit à infuser présente une symétrie axiale et le pourtour 52 est compris dans un plan perpendiculaire à l'axe de symétrie.

De manière non limitative le volume 51 enfermant le produit à infuser est constitué par l'assemblage de couches jointes par leurs périphéries au niveau d'une armature 55 de support définissant un pourtour périphérique. Avantageusement, la présente invention est utilisable avec des types variés de doses. Elle n'implique notamment pas que le pourtour de la dose soit rigide. Elle s'applique aux doses présentant une enveloppe extérieure souple ou rigide de type capsule et plus généralement à tout type de conditionnement à usage unique de produit à infuser. Elle s'applique également aux doses dont l'enveloppe extérieure est apte à disparaître au moins en partie lors de l'infusion, par dissolution par exemple. Elle s'applique encore aux doses formées d'un produit à infuser agrégé par un liant et/ou par l'application d'une pression. Une telle dose formée d'un agrégat de produit à infuser tel que le café peut être constituée en dehors de la machine ou être constituée par un module dédié de la machine.

Le système 10 selon l'invention comporte une chambre 7 d'infusion destinée à recevoir une dose. La chambre 7 comprend deux portions de chambres agencées pour être mutuellement éloignées ou rapprochées par un actionneur afin de respectivement fermer ou ouvrir la chambre 7 d'infusion.

On désignera par demi chambres des pièces aptes à être disposées en contact mutuel ou au contact d'une dose pour former un volume étanche faisant office de chambre 7 d'infusion. L'invention n'implique en aucune manière que les deux portions de chambre présentent mutuellement une quelconque symétrie.

Dans l'exemple de réalisation présenté, l'une des portions de chambre, désignée première portion de chambre 42 ou portion mobile, est portée par un actionneur autorisant le rapprochement et l'éloignement mutuels des portions de chambre. L'autre portion de chambre, désignée par la suite deuxième portion de chambre ou portion fixe 22, est solidaire d'un bâti 20 de la machine. Chacune des portions de chambre présente une extrémité définissant un pourtour contenu dans un plan sensiblement perpendiculaire à l'axe longitudinal 11.

On désignera par la suite axe longitudinal 11 ou direction longitudinal 11 la direction comprenant la direction principale de l'actionneur 40. On qualifiera de sens avant 12 le sens, selon cet axe longitudinal 11 contribuant au rapprochement mutuel des deux portions de chambre et on qualifiera de sens arrière 13, le sens selon cet axe longitudinal 11 permettant un éloignement mutuel des deux portions de chambre. La direction longitudinale 11, le sens avant 12 et le sens arrière 13 sont représentés en figure 1.

Dans le cadre de l'exemple de réalisation représenté, la première portion de chambre 42 présente un conduit d'alimentation 24 connecté à des moyens d'alimentation en fluide à infuser, typiquement de l'eau chaude. De manière conventionnelle, les moyens d'alimentation forment un circuit d'eau chaude comportant un réservoir, une chaudière permettant d'augmenter la température de l'eau du réservoir jusqu'à une température souhaitée en vue de son infusion dans la chambre 7, ainsi qu'une pompe permettant d'élever la pression de l'eau dans le circuit. Lors de l'infusion, les deux portions de chambre 42, 22 sont maintenues fermement au contact l'une de l'autre et délimitent un volume étanche de réception de la dose 50. L'étanchéité peut être réalisée par application des pourtours des deux portions de chambre sur le pourtour de la dose 50 qui fait alors office de joint. L'étanchéité peut également être assurée ou être renforcée des moyens d'étanchéité rapportés.

La deuxième portion de chambre 22 comporte un conduit d'évacuation 45 de boisson en communication fluidique d'une part avec l'intérieur de la chambre 7 d'infusion et avec une sortie de boisson d'autre part. Ce conduit d'évacuation 45 est destiné à assurer l'évacuation de la boisson résultant de l'infusion de la dose 50, vers un contenant tel qu'une tasse à café.

Après infusion, lorsque la première portion de chambre 42 est éloignée de la deuxième portion de chambre 22, la chambre 7 d'infusion est ouverte, la dose 50 déjà infusée n'est alors plus enserrée dans la chambre 7. Cette dose 50 est évacuée de la chambre 7 par gravité et tombe dans un bac de récupération.

De manière particulièrement avantageuse, le système est configuré de sorte que les moyens d'alimentation en fluide de la chambre 7 et l'actionneur de la chambre 7 sont disposés du même côté de la chambre 7. De manière encore plus avantageuse, les moyens d'alimentation et l'actionneur sont disposés en arrière de la chambre 7.

Ainsi, aucun organe d'alimentation de la chambre ou d'actionnement ne doit être disposé en avant de la deuxième portion 22. Cela permet de raccourcir la distance séparant la tasse de la chambre 7. Les pertes thermiques lors de l'acheminement de la boisson sont donc réduites, améliorant de ce fait la qualité de la boisson obtenue. En outre, la répétitivité de la qualité est améliorée puisque les pertes lors de l'acheminement de la boisson ne différents que légèrement selon l'utilisation de la machine. De plus, l'encombrement de la machine est réduit.

De préférence, l'actionneur entraînant la première portion de chambre est un vérin 40. Le vérin comprend un piston. La première portion 42 de chambre est portée par le piston du vérin 40. Le cylindre de vérin comporte un fond 102 faisant face à la surface de poussée 101 du piston. Le fond 102 du vérin 40, ses parois longitudinales et la surface de poussée 101 définissent une chambre de poussée 100. Cette chambre de poussée 100 est connectée à une entrée de fluide de poussée 109 destinée à être connectée à la pompe. L'activation de la pompe provoque la mise sous pression de la chambre de pression 100 ce qui entraîne le déplacement du piston vers l'avant 12 et son éloignement par rapport au fond 102 du cylindre.

Le système comprend des moyens de rappel du vérin 40 comprenant un ressort de rappel 106 configuré pour assurer le retour vers l'arrière 13 du piston en position rétractée lorsque la pression baisse dans la chambre de poussée 100. Le ressort 106 travaille en compression et s'étend longitudinalement. De préférence, il est cylindrique est entoure le piston. Il prend appui en amont sur le piston et en aval sur une butée 107 solidaire du bâti.

Le cylindre comporte des moyens d'emmanchement 103 formant saillie depuis le fond 102 et s'étendant en direction du piston. Le piston comporte un logement s'étendant depuis la surface de poussée 101. Le logement et les moyens d'emmanchement 103 sont conformés de sorte que les moyens d'emmanchement 103 pénètrent en profondeur dans le logement lors du retour du vérin 40 en position rétractée. Quelle que soit la position du piston, l'extrémité aval des moyens d'emmanchement 103 est insérée dans le logement du piston. Des joints 110 disposés entre les moyens d'emmanchement 103 et piston assurent en permanence l'étanchéité du passage 105.

Les moyens d'emmanchement 103 comportent un canal d'alimentation 104 intérieur. Une extrémité amont du canal 104 est fluidiquement reliée à une entrée de fluide 108 connectée à la chaudière. Une extrémité aval débouche dans un passage 105 formé par le logement. Ce passage 105 débouche en aval dans le conduit d'alimentation 24 porté par la première portion de chambre 42 et alimentant la chambre 7.

Ainsi, lors du déploiement du vérin 40, le piston s'éloigne du fond 102 du cylindre et le passage 105 s'agrandit. Inversement, lors de la rétractation du vérin 40, le passage 105 se raccourcit. Quelle que soit la position du piston, la chambre 7 est toujours en communication fluidique avec le canal d'alimentation 104.

Avantageusement ces moyens d'emmanchement 103 participent au guidage du piston. De manière préférée, le guidage du piston est également assuré par une coopération entre les parois longitudinales du cylindre et le piston. Au moins un joint 111 est disposé entre les parois longitudinales du cylindre et le piston pour assurer l'étanchéité de la chambre de poussée 100.

De préférence, les moyens d'emmanchement 103 définissent un arbre passant par le centre du cylindre.

### Dispositif de fermeture

Le système 10 comporte également un dispositif de fermeture 60. Ce dispositif de fermeture 60 comporte des moyens de fermeture aval 62 ainsi que des moyens de fermeture amont 61. Il est distinct de chacune des portions de chambre 22, 42 formant la chambre 7 d'infusion.

Les moyens de fermeture aval 62 sont disposés en aval de la chambre 7 d'infusion. Ils sont agencés de manière à faire office de butée d'arrêt escamotable pour une dose 50 introduite dans la chambre 7.

Dans une position non escamotée les moyens de fermeture aval 62 assurent la réception d'une dose 50 introduite dans la chambre 7 alors que celle-ci est ouverte, et empêchent l'éjection par gravité de cette dose 50 vers l'aval de la chambre 7.

Dans cette position les moyens de fermeture aval 62 interdisent également toute intrusion dans la chambre 7 depuis l'aval de cette dernière. Ainsi l'utilisateur ne peut pas, par exemple, introduire ses doigts dans la chambre 7.

Dans une position escamotée, les moyens de fermeture aval 62 ne forment pas une butée d'arrêt pour une dose 50 introduite dans la chambre 7 et permettent donc l'évacuation d'une dose 50 lors de l'ouverture de la chambre 7.

Les moyens de fermeture amont 61 sont agencés de manière à faire office de butée d'arrêt escamotable. Ils sont disposés en amont de la chambre 7 d'infusion.

Dans une position non escamotée les moyens de fermeture amont 61 empêchent l'accès d'une dose 50 ou de tout autre élément dans la chambre 7 d'infusion depuis l'amont de cette dernière. Dans cette position non escamotée les moyens de fermeture amont 61 assurent également la réception et participent au maintien en position d'une dose 50 introduite dans le système 10.

En position escamotée les moyens de fermeture amont 61 autorisent l'introduction d'une dose 50 dans la chambre 7 depuis l'amont de cette dernière.

Le système 10 est agencé de manière à faire passer le dispositif de fermeture 60 alternativement d'une première position dans laquelle les moyens de fermeture amont 61 empêchent l'entrée d'une dose 50 dans la chambre 7, et les moyens de fermeture aval 62 assurent qu'aucune dose 50 usagée ne demeure présent dans la chambre 7, à une deuxième position dans laquelle les moyens de fermeture amont 61 autorisent l'entrée d'une dose 50 dans la chambre 7 et les moyens de fermeture aval 62 permettent la réception et le maintien d'une dose 50 dans la chambre 7.

Le dispositif de fermeture 60 est agencé de manière à ce que la position des moyens de fermeture amont 61 conditionne la position des moyens de fermeture aval 62, et à ce que la position des moyens de fermeture aval 62 conditionne la position des moyens de fermeture amont 61.

Ainsi, pour une position donnée des moyens de fermeture amont 61, les moyens de fermeture aval 62 n'admettent qu'une seule position et inversement. Le système présente donc un fonctionnement séquentiel.

Ainsi, l'invention permet de réduire significativement les risques de blocage du système notamment dus au coincement de la dose entre des organes mécaniques. Le nombre d'interventions que doit effectuer un utilisateur ou un réparateur est par conséquent réduit. Elle contribue également à préserver l'intégrité de la dose 50. Par ailleurs, elle empêche qu'une dose introduite dans la machine ne tombe directement dans le bac de récupération sans avoir été au préalable réceptionné au niveau de la chambre de fusion.

Les moyens de fermeture amont 61 et les moyens de fermeture aval 62 sont solidaires. Cette caractéristique contribue à simplifier la cinématique, à améliorer la robustesse et à limiter le coût de revient et le taux de défectuosité du système 10. Le dispositif de fermeture 60 formant une seule pièce définit ainsi une bague.

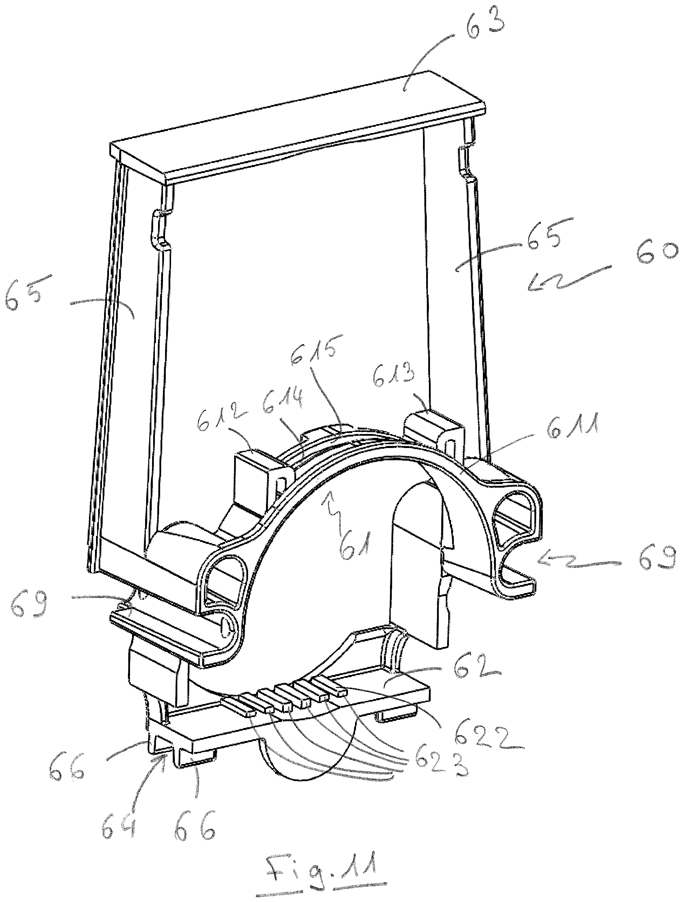

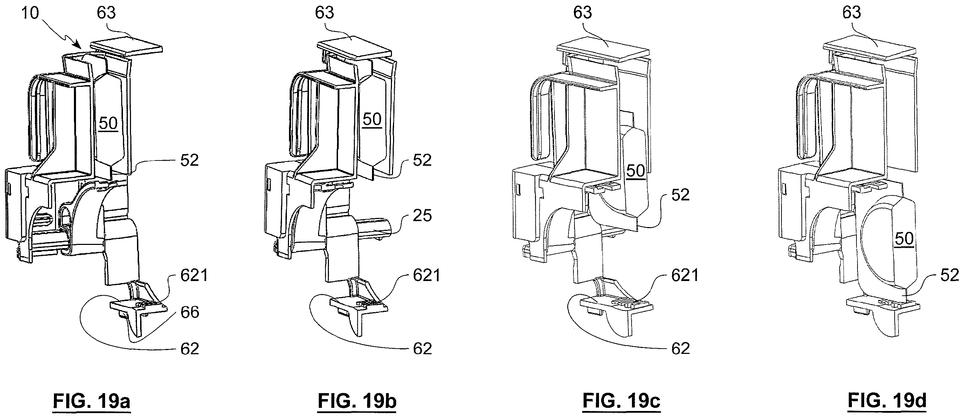

Les figures 11 et 19d laissent apparaître en détail le dispositif de fermeture 60 selon cet exemple de réalisation. Ce dispositif de fermeture 60 comprend :
- un organe de guidage agencé de manière à guider le dispositif de fermeture 60 dans son déplacement alternatif entre la première et la deuxième position. De préférence, l'organe de guidage comprend deux coulisseaux 69 aptes à assurer le guidage en translation du dispositif de fermeture 60 le long de deux arbres 25, 25 portés par le bâti 20 du système 10 et s'étendant selon deux axes de guidage parallèles à l'axe longitudinal 11,
- deux bras 65, 65 s'étendant chacun depuis un coulisseau 69 respectif et dans une direction sensiblement perpendiculaire à l'axe de guidage,
- des moyens de fermeture amont 61 agencés de manière à faire office de butée d'arrêt pour une dose 50 en amont de la chambre 7 lorsque le dispositif de fermeture 60 est disposé dans la première position. De manière avantageuse, les moyens de fermeture amont 61 présentent une forme de portion de couronne dont chacune des extrémités joint l'un des bras 65, 65 et qui est centrée sur un axe parallèle aux axes de guidage,
- des moyens de fermeture aval 62 agencés de manière à faire office de butée d'arrêt pour une dose 50 en aval de la chambre 7 lorsque le dispositif de fermeture 60 est disposé dans la deuxième position. De manière avantageuse, les moyens de fermeture aval 62 présentent une forme plane s'étendant selon une direction horizontale perpendiculaire à la direction de coulissement, formant ainsi deux extrémités, chacune des extrémités joignant joint l'un des deux bras 65, 65 et qui est centré sur un axe parallèle aux axes de guidage.

Par ailleurs, les moyens de fermeture amont 61 et aval 62 sont disposés de manière à présenter un décalage mutuel selon la direction principale de déplacement du dispositif de fermeture 60. Ainsi, dans la deuxième position les moyens de fermeture amont 61 sont disposés sensiblement en avant de la deuxième portion de chambre 22 et les moyens de fermeture aval 62 sont disposés sensiblement en arrière de la deuxième portion de chambre 22. Dans la première position les moyens de fermeture amont 61 et les moyens de fermeture aval 62 sont disposés sensiblement en arrière de la deuxième portion de chambre 22.

Les dimensions de ce décalage sont choisies de manière à ce que :
- lorsque le dispositif de fermeture 60 est disposé dans la première position, les moyens de fermeture amont 61 empêchent l'entrée d'une dose 50 dans la chambre 7, et les moyens de fermeture aval 62 autorisent la sortie d'une dose 50 usagée hors de la chambre 7,
- lorsque le dispositif de fermeture 60 est disposé dans la deuxième position les moyens de fermeture amont 61 autorisent l'entrée d'une dose 50 dans la chambre 7, les moyens de fermeture aval 62 permettent la réception et le maintien d'une dose 50 introduite dans la chambre 7.

Ainsi dans cet exemple le dispositif de fermeture 60 étant monté coulissant sur l'axe longitudinal 11, les moyens de fermeture amont 61 et aval 62 présentent un décalage mutuel selon l'axe longitudinal 11. Les moyens de fermeture amont 61 sont disposés en avant des moyens de fermeture aval 62 selon ce même axe.

Le système 10 comporte des moyens d'actionnement permettant le passage alternatif de la première à la deuxième position. Ce sont les mêmes moyens d'actionnement qui agissent à la fois sur les moyens de fermeture amont 61 et sur les moyens de fermeture aval 62.

Le système 10 permet par conséquent de limiter considérablement les risques de coincement des conditionnements.

Le nombre d'actionneurs étant réduit, la complexité de la structure du système 10 s'en trouve significativement limitée. Cette structure permet une simplification de la cinématique des organes permettant de passer alternativement de la première à la deuxième position.

Au moins un ressort d'écartement, travaillant de préférence en compression, tend à pousser le dispositif de fermeture 60 vers la première portion 42 de chambre 7 et à rapprocher le dispositif de fermeture 60 de la tête du vérin 40. Le ressort d'écartement repousse donc le dispositif de fermeture 60 vers l'arrière 13.

De manière préférentielle, on dimensionnera le ressort d'écartement de manière à ce qu'un coincement de la dose 50 entre le dispositif de fermeture 60 et un autre élément du système 10 ne nuise pas à l'intégrité de la dose 50. Ainsi, on choisira par exemple un ressort exerçant sur le dispositif de fermeture 60 une force équivalente au poids de la dosette 1 additionné de celui du dispositif de fermeture 60 et majoré au minimum d'un tiers du total. L'effort d'écartement est ainsi compris entre 0.6 et 1,5 Newton.

Préférentiellement, le dispositif de fermeture comporte deux logements 47,47 configurés pour loger chacun un ressort d'écartement. Ces logements 47 apparaissent en figure 11. Le système est agencé de sorte que chaque ressort d'écartement prend appui d'une part sur un fond du logement 47 et d'autre part sur une paroi liée au bâti 20.

L'extrémité avant des arbres 25, 25 est liée au bâti 20.

Le déplacement vers l'avant du dispositif de fermeture 60 ainsi que l'enclenchement du déplacement du dispositif de fermeture 60 dans un sens ou dans l'autre seront décrits plus en détail par la suite.

Le dispositif de fermeture 60 est entraîné par un dispositif d'entraînement non illustré. Par exemple ce dispositif comprend au moins un doigt d'entraînement coopérant avec une butée 66 portée par le dispositif de fermeture 60.

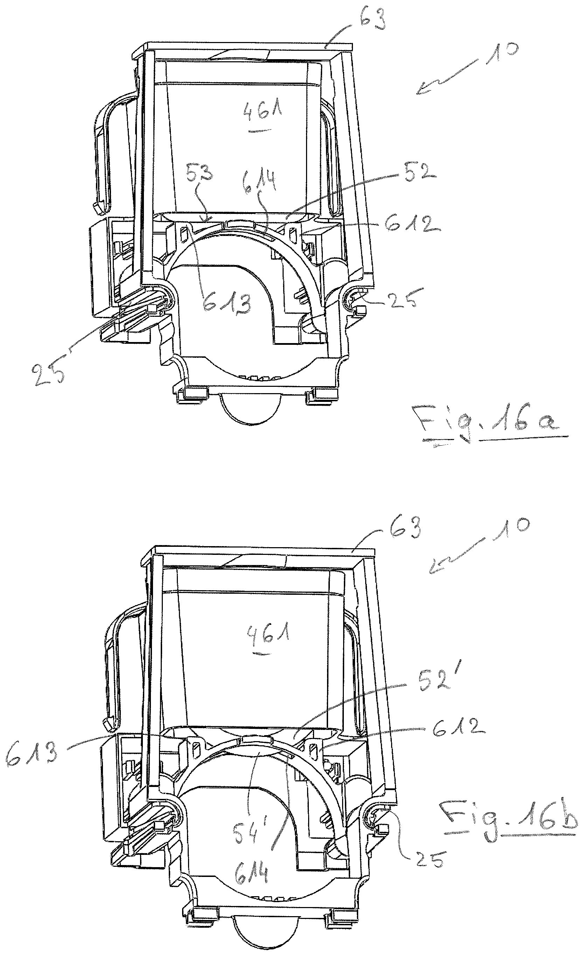

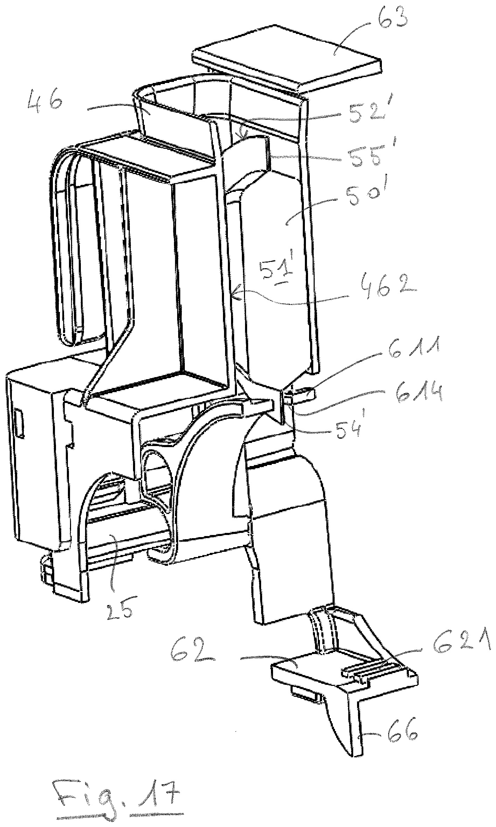

De préférence, comme illustré en figures 11 à 19d, le dispositif de fermeture 60 comprend une paire de butée 66, 66 réparties de chaque côté de l'axe de déplacement. Chaque paire de butées 66, 66 est configurée pour accueillir un doigt d'entraînement. Le déplacement longitudinal du doigt entraîne le dispositif de fermeture 60 en translation.

Le système 10 comporte également des moyens de guidage 46. Ces moyens de guidage 46 présentent sensiblement la forme d'un manchon complémentaire de la forme de la section de la dose 50. Ils sont configurés pour empêcher tout mouvement significatif de la dose 50 dans un plan horizontal, et à autoriser son déplacement vertical. Ils font office de trémie.

Selon le mode de réalisation illustré, ces moyens de guidage 46 sont solidaires du bâti 20. Ils sont donc fixes. De préférence, ils sont montés sur la deuxième portion 22 ou sur une pièce solidaire de cette dernière ou du bâti 20. Ils sont agencés de manière à assurer le guidage de la dose 50 en amont des moyens de fermeture amont 61. Ils présentent ainsi deux surfaces de guidage latérales 463 qui limitent le déplacement de la dose dans un plan perpendiculaire à l'axe de translation 11.

Par ailleurs, ces moyens de guidage 46 sont longitudinalement disposés de manière à être disposés au droit de l'ouverture de la chambre 7 dans la deuxième position afin d'autoriser l'introduction d'une dose 50 dans cette dernière lorsque les moyens de fermeture amont 61 sont escamotés. Plus précisément, ils sont positionnés au droit des moyens de fermeture aval 62 lorsque ces derniers sont dans la deuxième position. Ils guident ainsi la descente de la dose 50 jusque dans la chambre 7.

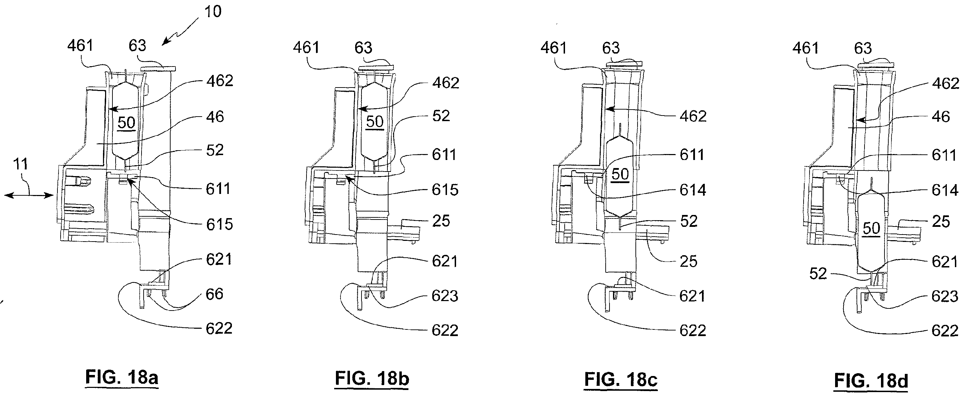

Par ailleurs, ils sont verticalement disposés de manière à être suffisamment proches des moyens de fermeture amont 61 pour assurer le maintien de la dose 50 lorsque cette dernière repose sur les moyens de fermeture amont 61. Ainsi, lorsqu'une dose 50 repose sur les moyens de fermeture amont 61 et que ces derniers translatent vers l'avant, les moyens de guidage 46 contribuent à empêcher toute translation longitudinale significative de la dose 50. Ils présentent à cet effet une surface d'appui 462 configurée pour prendre appui sur la dose. Dans le mode de réalisation illustré les moyens de fermeture 60 coulissent par rapport aux moyens de guidage 46, la surface d'appui 462 bloque alors le coulissement de la dose selon l'axe longitudinal 11. La surface d'appui 462 est par exemple illustrée sur les figures 18a à 18d.

Cette dernière est donc maintenue au regard de l'ouverture de la chambre 7 d'infusion lorsque les moyens de fermeture amont 61 sont totalement escamotés. Le mouvement relatif du dispositif de fermeture 60 et des moyens de guidage 46 permet ainsi le transfert de la dose 50 depuis les moyens de fermeture amont 61 à la chambre 7. Par ailleurs, ce mouvement relatif permet de protéger l'intégrité de la dose 50 lors de ce transfert. Ce guidage de la dose est clairement illustré en figures 1 à 4 et sera décrit plus en détail en référence aux figures 18a à 19d.

En prévoyant des moyens de guidage 46 fixes, l'invention contribue à renforcer la robustesse et la fiabilité du système tout en maintenant le caractère séquentiel du fonctionnement.

Dans un mode de réalisation alternatif non illustré où les moyens de guidage 46 coulissent par rapport aux moyens de fermeture 60 fixes, la surface d'appui 462 pousse la dose selon l'axe longitudinal 11 et la fait coulisser sur la pièce 661 formant les moyens de fermeture amont 61.
Ces moyens de guidage 46 permettent de maintenir en position une dose 50 reposant sur les moyens de fermeture amont 61 de manière à faciliter la mise en place de cette dose 50 dans la chambre 7. Optionnellement, les moyens de guidage 46 présentent deux rainures sensiblement parallèles et verticales, destinées à coopérer avec le pourtour de la dose 50 afin d'améliorer le guidage de cette dernière.

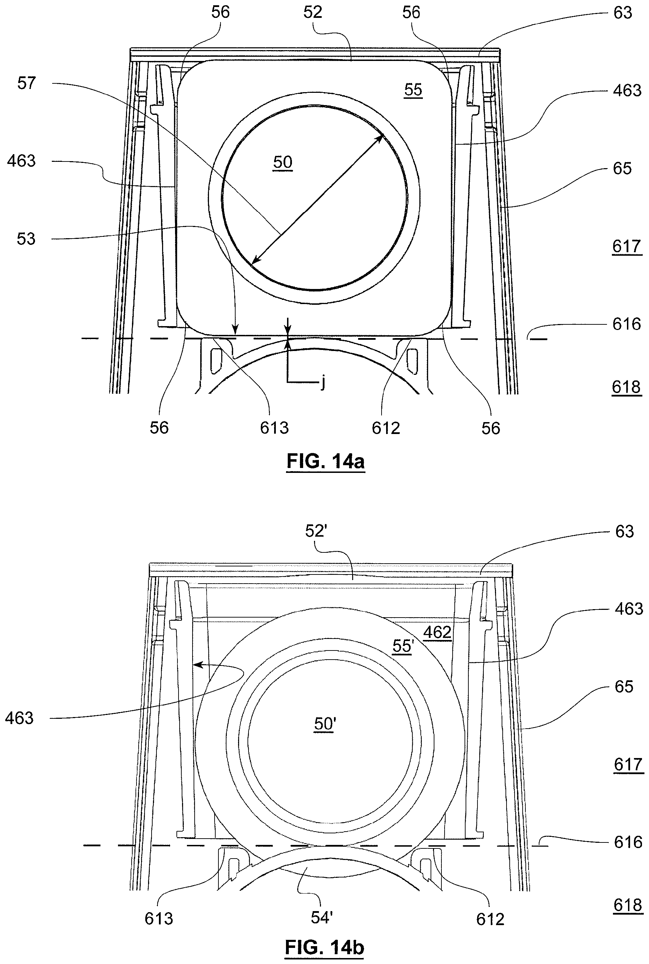

De manière particulièrement avantageuse, les moyens de fermeture amont 61 forment une première pièce 611 présentant des moyens de réception pour la dose. Typiquement, les moyens de fermeture amont 61 présentent au moins deux zones de soutien 612, 613 configurées pour accueillir une portion d'une dose 50 adaptée au système et de manière avantageuse le pourtour 52 d'une telle dose. Ces deux zones de soutien 612, 613 définissent ensemble de préférence un plan 616 préférentiellement horizontal. Il peut s'agir par exemple de deux arêtes disposées parallèlement à la direction de translation 11. Selon l'exemple illustré, ces deux zones de soutien 612, 613 forment chacune un plan. Les moyens de fermeture amont 61 définissent alors un plan 616 et deux portions d'espace 617, 618 situées respectivement au-dessus et en dessous du plan 616 selon une direction verticale. Les plans 616 et les portions d'espace 617, 618 sont par exemple illustrées en figures 14a et 14b. Si la dose est adaptée à la machine, elle repose typiquement par son pourtour 52 sur les zones de soutien 612, 613.

Les moyens de fermeture amont 61 définissent également un espace, également désigné ouverture, situé entre les deux zones de soutien 612, 613 et conformé pour pouvoir être pénétré par une dose 50' ou par le pourtour d'une telle dose lorsque cette dose 50' repose sur les moyens de fermeture amont 61 et que cette dose n'est pas adaptée à être utilisée avec le système. Cette ouverture définit une fente 614 sur le mode de réalisation illustré, ce qui apparaît notamment aux figures 11, 12 et 15a, 16a, 17 et 18a à 19d. Cette fente 614 s'étend essentiellement selon une direction transversale par rapport à l'axe longitudinal 11 de coulissement.

La dose une fois insérée dans la machine et avant qu'elle ne se positionne à l'emplacement prévu pour l'infusion est donc située en partie au moins dans la portion supérieure d'espace 617. Si la dose est adaptée au système, comme cela est le cas avec la dose 50 illustrée en figure 14a, 15a, 16a et 18a à 19d, la dose 50 ne pénètre pas dans l'ouverture. Elle est de préférence entièrement positionnée dans la portion d'espace 617 située au-dessus du plan 616. L'armature 55 ou plus généralement une portion du pourtour 52 de la dose repose sur les zones de soutien 612, 613.

Typiquement, cette dose 50 présente au moins une portion de pourtour 52 rectiligne tout au moins sur une portion délimitée par deux zones destinées chacune à prendre appui sur une zone de soutien 612, 613. Cette portion de pourtour 52 rectiligne destinée à être positionnée entre les deux zones de soutien 612, 613 et référencée 53 sur les figures 14a, 15a, 16a. De préférence, la dose 50 présente un pourtour de forme polygonale. De préférence, le pourtour 52 est carré, ce qui permet un fonctionnement indépendant du sens d'insertion de la dose 50 autour de la direction de coulissement de cette dernière dans le système.

Si la dose n'est pas adaptée au système comme cela est le cas avec la dose 50' illustrée en figures 14b, 15b, 16b et 17, cette dose 50' pénètre dans l'ouverture. Ainsi, elle est pour partie située dans la portion d'espace 617 située au-dessus du plan 616 et pour partie située dans la portion d'espace 618. Dans l'exemple illustré, c'est l'armature 55' de la dose qui pénètre dans l'ouverture définie par la fente 614. La portion de dose 50' qui pénètre dans l'ouverture, typiquement la fente 614, est référencée 54' sur les figures.

Les moyens de fermeture amont 61 comprennent également au moins un organe formant une butée axiale 615 pour une dose 50' dont une portion est amenée au contact de la butée axiale 615 lors du coulissement de la dose. De manière préférée, une partie de cette dose 50' pénètre dans la portion d'espace située en dessous du plan 616 défini par les surfaces d'appui 612, 613. Le système est conformé de manière à ce que lors du coulissement relatif des moyens de fermeture amont 61 par rapport aux moyens de guidage 46, la butée axiale 615 entre au contact de la portion 54' de la dose 50'. La butée axiale 615 bloque alors le déplacement relatif de la dose 50' par rapport aux moyens de fermeture amont 61. Comme la dose 50' demeure en appui sur les moyens de guidage 46 sans possibilité de coulissement par rapport à ces derniers, les moyens de fermeture amont 61 sont alors bloqués par rapport aux moyens de guidage 46.

Tout coulissement relatif est alors empêché. Le système est bloqué et la boisson ne peut pas être préparée. L'invention permet ainsi d'empêcher de manière particulièrement efficace et simple qu'une dose 50' non adaptée à la machine puisse être utilisée dans cette dernière.

De manière avantageuse et comme cela sera détaillé par la suite, le système asservit le fonctionnement de la pompe à la position de la pièce mobile (les moyens de fermeture amont 61 dans l'exemple illustré) par rapport au bâti.

Sur l'exemple illustré, où l'ouverture est formée par une fente 614, la butée axiale 615 est formée par un contour ou un bord de la fente 614. Cette butée axiale 615 est référencée sur les figures 11, 18a et 18b. Il est limité par le contour de l'ouverture qui est positionné le plus en aval selon le sens de coulissement relatif des moyens de fermeture amont 61 par rapport aux moyens de guidage 46.

Dans le mode de réalisation illustré, les deux zones de soutien 612, 613 forment saillie sur la forme principale de la première pièce 611, dans l'exemple illustré une portion de couronne, des moyens de fermeture amont 61.

Selon un mode de réalisation avantageux, les zones de soutien 612, 613 sont conformées pour définir un jeu «j» entre le plan 616 qu'elles définissent et la butée axiale 615. Ce jeu « j » est illustré en figure 14a. Ce jeu permet de s'assurer qu'une dose 50 adaptée au système n'entre pas au contact de la butée axiale 615 quand bien même elle présenterait quelques défauts de fabrication. Typiquement, le jeu « j » est de l'ordre de 0,5 à 5 mm.

Sur les figures 14a, 15a et 16a, on voit clairement que la dose 50 est retenue par les zones de soutien 612, 613. Elle ne pénètre pas dans la fente 614 et ne se place donc pas au regard de la butée axiale 615 selon l'axiale longitudinal 11.

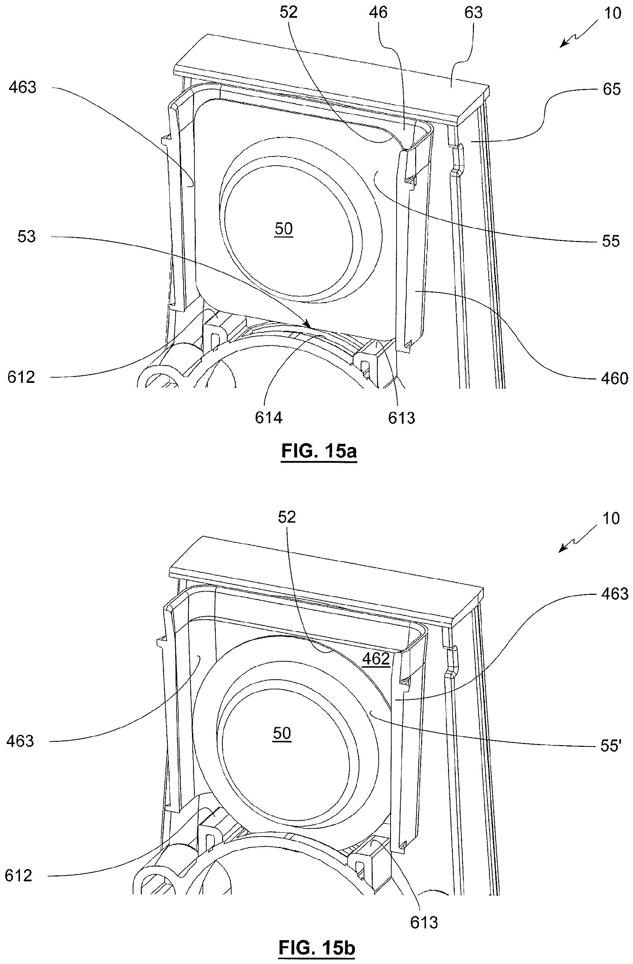

Sur les figures 14b, 15b 16b et 17, la dose 50' non adaptée au système, pénètre quant à elle dans la fente 614. Son déplacement vertical est interrompu par le contact avec le contour de la fente 614 comme illustré sur ces figures ou par contact entre son pourtour 52' et les zones de soutien 612, 613. Quelle que soit la façon dont cette dose 50' non adaptée au système est retenue par les moyens de fermeture amont 61, la dose 50' se place au regard de la butée axiale 615 selon la direction 11 de translation.

Des exemples non limitatifs de doses adaptées à un système selon l'invention vont maintenant être décrits plus en détail.

La dose 50 forme un conditionnement comportant un premier revêtement et un deuxième revêtement assemblés à leur périphérie dans un plan de joint de sorte à délimiter un volume de réception 51 de matière de préparation de boisson. De préférence, les périphéries assemblées des premier et deuxième revêtements définissent une armature 55 périphérique dont le contour extérieur également désigné pourtour 52 a un profil sensiblement rectangulaire.

De préférence, le profil sensiblement rectangulaire comporte un congé de raccordement à chacun de ses coins, ce qui permet de réduire les risques d'accrochage involontaire du pourtour dans la machine. De préférence, les congés de raccordement 56 sont en arc de cercle.

De préférence, le profil sensiblement rectangulaire est sensiblement carré et d'une longueur de côté comprise entre 5 cm et 5,5 cm. De préférence, la portion périphérique a une largeur de 0,5 cm. De préférence, le dispositif renferme entre 9 et 15 grammes de mouture de café.

De préférence, au moins un parmi les premier et deuxième revêtements comporte une couche à base de papier filtre.

De préférence, les périphéries assemblées des premier et deuxième revêtements définissent une portion périphérique comprenant en outre une armature de renfort, l'armature couvre toute la surface de la portion périphérique.

De préférence, la dimension séparant l'espace fermé de stockage et le pourtour est inférieure à 15 mm, de préférence inférieur à 10 mm et de préférence inférieur à 5 mm.

Selon un premier mode de réalisation illustré sur les figures 14a et 15a notamment, le volume de réception présente une section, suivant un plan parallèle au plan de joint, sensiblement circulaire.

De préférence, le diamètre 57 de la section circulaire est compris entre 30 et 35 mm et de préférence entre 35 et 45 mm et de préférence entre 38 et 42 mm.

De préférence, la dimension séparant l'espace fermé de stockage et le pourtour est inférieure à 15 mm, de préférence inférieur à 10 mm et de préférence inférieur à 5 mm.

De préférence, le profil sensiblement rectangulaire et la section sensiblement circulaire ont le même centre.

Selon un autre mode de réalisation, non illustré sur les figures, le volume de réception présente une section, suivant un plan parallèle au plan de joint, carrée.

De préférence, chaque côté du pourtour est parallèle à un côté de la section du volume de réception.

De préférence, la portion périphérique a une largeur sensiblement constante autour du volume de réception.

De préférence, la section sensiblement rectangulaire comporte un congé de raccordement à chacun de ses angles.

De préférence, les congés de raccordement sont en arc de cercle.

De préférence, l'arc de cercle a un rayon de l'ordre de 0,5 cm,
De préférence, la section sensiblement rectangulaire est sensiblement carrée et d'une longueur de côté comprise entre 4,5 cm et 5 cm.

De préférence, le profil sensiblement rectangulaire et la section sensiblement rectangulaire ont le même centre.

Le système 10 comprend également une trappe 30 définissant une ouverture disposée en amont des moyens de fermeture amont 61 et en amont des moyens de guidage 46. L'ouverture de la trappe 30 est disposée longitudinalement de manière à être située au droit des moyens de guidage 46. Ils sont ainsi positionnés au droit des moyens de fermeture amont 61 lorsque le dispositif de fermeture 60 est disposé dans la première position. L'ouverture définit par la trappe 30 est accessible par un utilisateur et est destinée à recevoir une dose 50 pour son introduction dans le système 10.

Les moyens de guidage 46 étant fixes par rapport à la trappe 30, l'invention supprime tout risque de coincement d'une dose ou de tout autre objet tel qu'un doigt entre les moyens de guidage 46 et la trappe 30.

Le dispositif de fermeture 60 comporte des moyens d'obstruction 63 agencés de manière à :
- obstruer l'ouverture de la trappe 30 lorsque le dispositif de fermeture 60 est disposé dans la deuxième position,
- laisser libre l'ouverture de la trappe 30 lorsque le dispositif de fermeture 60 est disposé dans la première position.

Avantageusement, le dispositif de fermeture 60 est formé d'une pièce unique venue de matière. Le dispositif de fermeture 60 pourra par exemple être constitué en aluminium, en acier inoxydable ou encore en plastique.

Comme indiqué précédemment, le système 10 comporte une pompe destinée à alimenter la chambre 7 en fluide. Par ailleurs, cette pompe, dans l'exemple particulier décrit, alimente également l'actionneur permettant de fermer et d'ouvrir la chambre 7. En effet, la pompe alimente un circuit hydraulique d'actionnement du vérin 40.

La pompe est alimentée en électricité par un circuit électrique muni d'un premier et d'un deuxième interrupteur.

Le premier interrupteur se ferme sous la commande d'un utilisateur. Avantageusement, un bouton de commande est lié au premier interrupteur et son actionnement permet de fermer le premier interrupteur.

Le deuxième interrupteur se ferme lorsque le dispositif de fermeture 60 est disposé dans la deuxième position. De manière plus précise, le système 10 comporte des moyens d'asservissement agencés de manière à asservir le fonctionnement de la pompe en fonction de la position du dispositif de fermeture 60.

Les moyens d'asservissement sont configurés pour interdire le fonctionnement de la pompe, lorsque la présence d'un obstacle en partie basse du système 10 empêche un positionnement correct du dispositif de fermeture 60. Ainsi, lorsqu'une dose 50' non adaptée à la machine est introduite dans le système ou lorsque par exemple le bac de récupération est plein et qu'une dose 50 déjà infusée ne peut être évacuée correctement et empêche le fonctionnement adéquat du dispositif de fermeture 60, la pompe ne peut fonctionner et des moyens d'alerte sont éventuellement activés. Il en est de même si un utilisateur insère des doigts à travers l'ouverture aval de la chambre. L'eau chaude n'est pas distribuée à la chambre et le vérin n'est pas actionné. Les risques de brûlure ou de coincement de doigts sont donc évités même en cas d'utilisation anormale du système.

En outre, l'invention permet de préserver l'intégrité d'une dose 50 qui serait présente dans la chambre 7 alors que le dispositif de fermeture 60 est bloqué. En effet, l'actionnement de la pompe aurait pour effet d'écraser la dose 50 et de l'humidifier.

En référence aux figures 18a à 19d on va maintenant décrire un cycle de fonctionnement permettant de préparer une boisson.

L'utilisateur introduit une dose 50 dans l'ouverture de la trappe 30. Cette dose 50 tombe par gravité en étant guidée et en étant maintenue en position sensiblement verticale par les moyens de guidage 46, typiquement par les surfaces de guidage 463, la surface d'appui 462 ainsi que par la paroi formant une surface au regard de la surface d'appui 462. Le déplacement par gravité de cette dose 50 est interrompu par les moyens de fermeture amont 61 disposés au regard de l'ouverture de la trappe 30 et des moyens de guidage 46. Ces moyens de fermeture amont 61 empêchent au conditionnement 1 d'accéder à l'intérieur de la chambre 7. Cette phase est illustrée en figure 18a et 19a.

Sur l'exemple illustré, la dose 50, lorsqu'elle repose sur les portions d'appui 612, 613, ne présente pas de portion apte à pénétrer dans l'ouverture formée par la fente 614.

Dans une étape ultérieure illustrée aux figures 18b, 18c et 19b, 19c, l'utilisateur commande l'actionnement du dispositif de fermeture 60. Ce dernier est alors libre de coulisser vers l'avant sous l'effet du dispositif d'entraînement non représenté agissant sur les butées 66,66. Lors de ce déplacement, les moyens de fermeture amont 61 se déplacent vers l'avant et les moyens de guidage 46, fixés au bâti, maintiennent la dose 50 au droit de l'ouverture de la chambre 7. Au fur et à mesure de leur déplacement vers l'avant, les moyens de fermeture amont 61 libèrent l'ouverture de la chambre 7. Par ailleurs, les moyens de fermeture aval 62 obstruent progressivement l'ouverture de la chambre 7 en aval de cette dernière. Lorsque l'ouverture de la chambre 7, dégagée par les moyens de fermeture amont 61 est suffisamment importante, la dose 50 s'introduit par gravité dans la chambre 7 où elle est réceptionnée par les moyens de fermeture aval 62 formant une butée d'arrêt. Cette phase est illustrée en figures 18c, 18d et 19c, 19d.

De préférence les moyens de fermeture aval 62 présentent une surface 622 de réception sur laquelle le pourtour de la dose 50 est destiné à tomber lors de son arrivée sur les moyens de fermeture aval. Les moyens de fermeture aval 62 comprennent également organe de dévetissage 621 qui forme saillie au-delà de la surface de 622. La saillie définie une butée 623 axiale de dévetissage tournée vers la dose 50 lorsque cette dernière repose sur la surface 622. La machine est agencée de sorte à ce que la chambre fixe et la surface 622 de réception soient disposées de part et d'autre de la butée 623 axiale de dévetissage. Ainsi, lorsque la dose est repose sur la surface 622 de réception, un coté de la dose est au regard à la fois de la chambre fixe et de la butée 623 axiale.

Ainsi, après infusion et lors de l'écartement des deux chambres, si la dose a tendance à rester collée à la chambre fixe, alors l'éloignement de la bague selon la direction 11 entraîne l'éloignement de la surface 622 de réception et de la butée axiale 623 de dévetissage par rapport à la chambre fixe ; la butée axiale 623 de dévetissage entre alors au contact du pourtour de la dose 50 et l'écarte de la chambre fixe. La dose est alors décollée de la chambre fixe et peut être extraite du groupe d'infusion.

Cette solution s'avère particulièrement robuste et améliore la fiabilité de la machine.

Le déplacement vers l'avant du dispositif de fermeture 60 se poursuit jusqu'à ce que ce dernier entre en butée avec un élément du bâti 20. Cette phase est illustrée plus particulièrement en figures 19c, 19d. Dans cette position le dispositif de fermeture 60 est disposé dans la deuxième position. Dans cette position :
- les moyens de fermeture amont 61 permettent l'accès à la chambre 7 d'infusion depuis l'amont de cette dernière,
- les moyens de fermeture aval 62 assurent la réception de la dose 50 introduit dans la chambre 7,
- les moyens d'obstruction 63 obstruent l'ouverture de la trappe 30 empêchant ainsi l'introduction de conditionnements ou de tout autre objet à travers cette dernière,
- un contacteur électrique solidaire du bâti est au contact d'un doigt de contact entrainé par la bague et les moyens d'asservissement permettent le fonctionnement de la pompe.

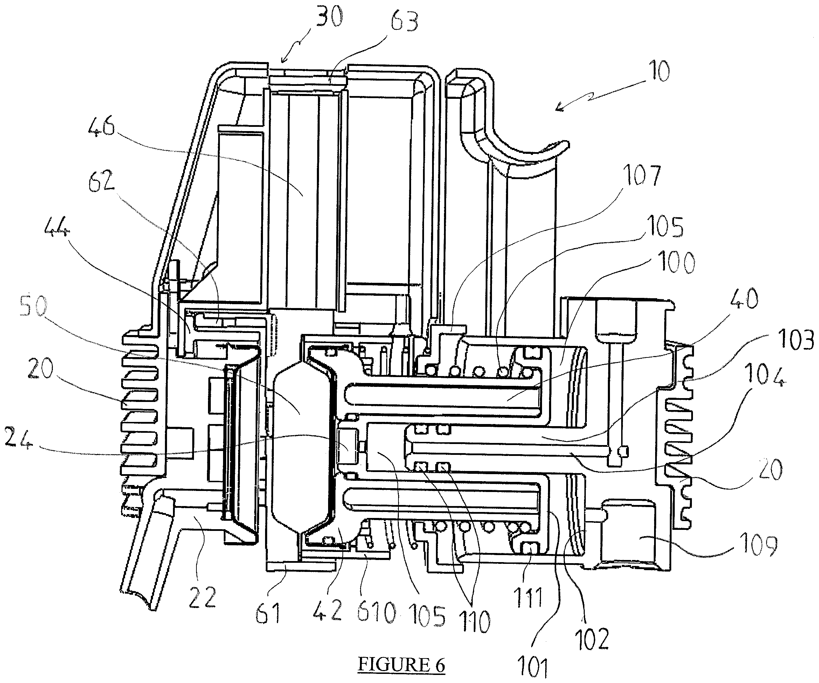

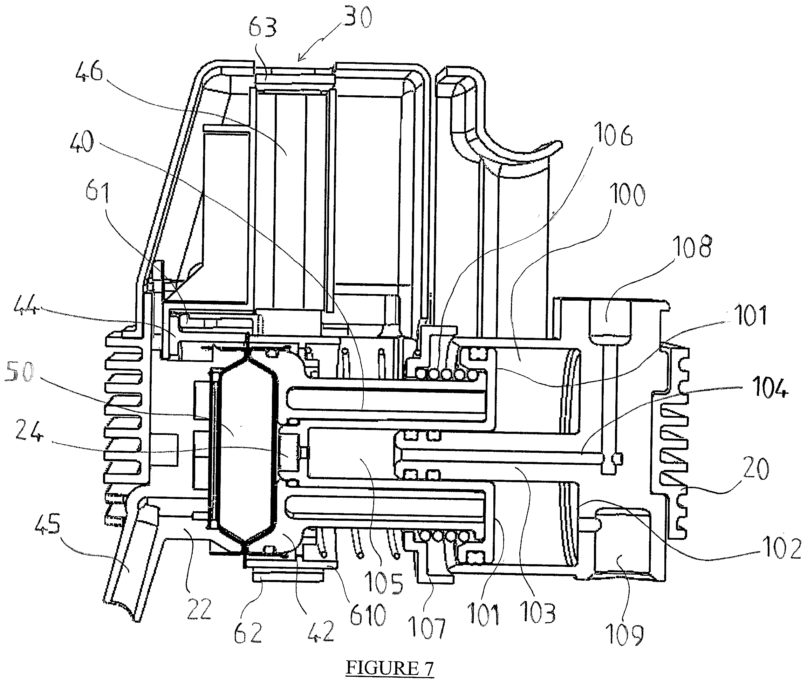

La pompe alimente la chambre de poussée 100 en passant par l'entrée 109. Une force de poussée s'applique sur la surface de poussée 101 du vérin 40, rétractant le ressort de rappel 106 et entraînant le déplacement de la tête de vérin 40 vers l'avant comme illustré en figure 6. Ce déplacement se poursuit jusqu'à ce que les deux portions 24, 42 de chambres forment un volume étanche enserrant la dose 50 comme illustré en figure 7 L'eau chauffée par la chaudière et issue du réservoir pénètre dans la chambre 7 ainsi fermée successivement par l'entrée 108 de fluide d'infusion, le canal d'alimentation 104 et les passages 105 et 24 permettant l'infusion de la dose 50. Le conduit d'évacuation 45 porté par la deuxième portion 22 permet l'extraction de la boisson vers le contenant.

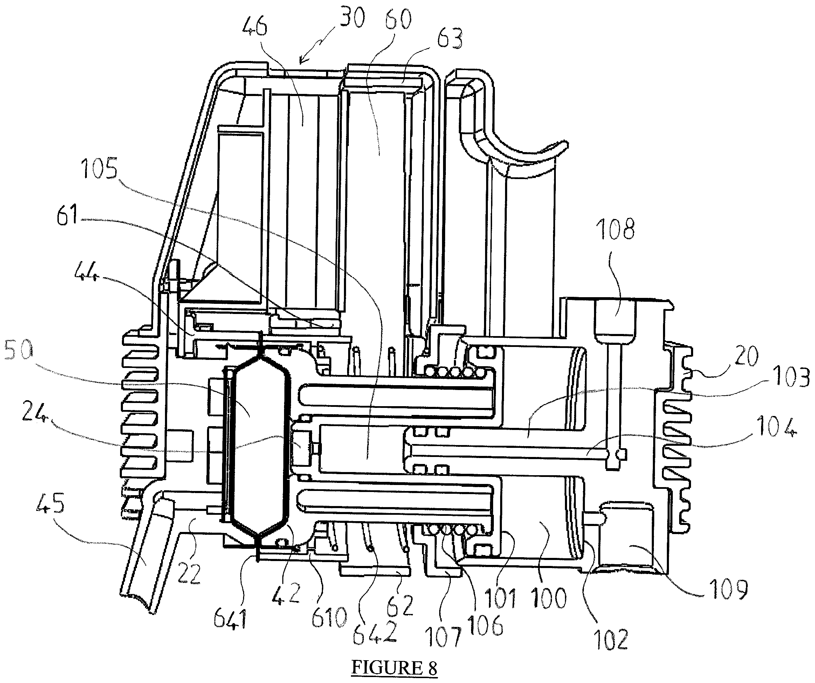

Une fois l'infusion terminée, le dispositif d'entraînement non représenté et agissant sur les butées 66,66 autorise le retrait vers l'arrière du dispositif de fermeture 60. Les moyens de fermeture regagnent la première position autorisant la libération de la dose 50 hors de la chambre 1. Cette phase est illustrée en figure 8.

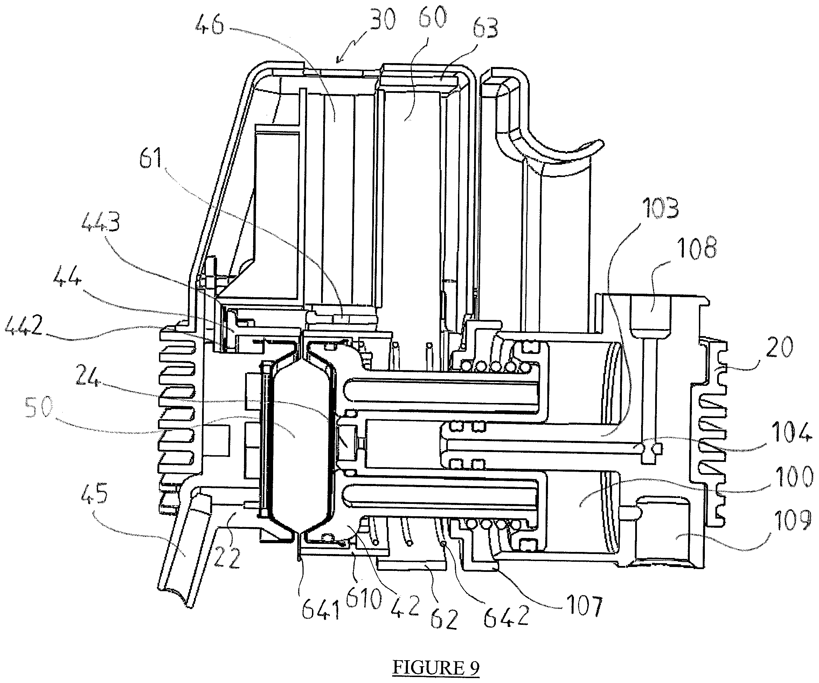

La tête de vérin 40, sous l'effet du ressort de rappel 106 agissant en compression, amorce son retrait vers l'arrière, comme illustré en figure 9.

La dose 50 se trouve ainsi disposée entre les deux demi chambres sans être pour autant solidaires de l'une d'elles.

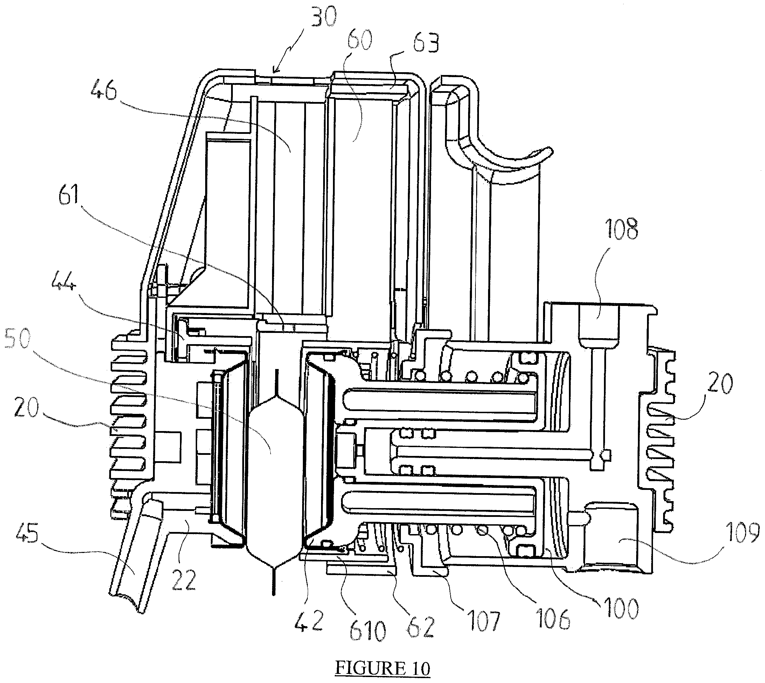

Les deux portions 22, 42 en forme de coupelles assurent sensiblement un guidage de la dose 50 vers l'ouverture de la chambre 7 lorsqu'elles s'éloignent mutuellement. Le dispositif de fermeture 60 est ramené jusqu'à la première position : les moyens de fermeture aval 62 n'entravent plus l'éjection de la dose 50 et cette dernier peut alors être évacuée vers le bac de récupération de la chambre 7 par gravité. Cette phase est illustrée en figure 10. Par ailleurs, les moyens d'obstruction 63 laissent l'ouverture de la trappe 30 libre et une nouvelle dose 50 peut être insérée dans le système 10.

Avantageusement, l'invention présente un fonctionnement qui offre une répétitivité améliorée de la qualité de la boisson obtenue et une plus grande fiabilité, les risques de blocage du mécanisme et de dégradation de l'intégrité de la dose étant réduits.

De nombreuses variantes peuvent être apportées au dispositif décrit précédemment sans sortir pour autant du cadre de l'invention.

Notamment, on pourra prévoir que le dispositif de fermeture 60 soit agencé de manière à translater suivant une direction principale différente de celle de l'axe longitudinal 11, comme par exemple une direction principale horizontale et perpendiculaire à l'axe longitudinal 11. Pour un tel dispositif de fermeture 60 les moyens de fermeture amont 61 et aval 62 d'un tel dispositif sont décalés selon cette direction principale.

L'actionnement du dispositif de fermeture 60 est assuré par un moteur électrique ou de manière manuelle.

L'adaptation du système 10 décrit précédemment à des conditionnements différents de celui représenté sur les figures peut être effectuée aisément en modifiant les dimensions et la configuration des moyens de fermeture amont 61 et aval 62, des moyens de guidage 46, de l'ouverture de la trappe 30 ainsi que des deux demi chambres 22, 42.

L'invention n'est pas limitée aux modes de réalisation décrits mais s'étend à tout mode de réalisation entrant dans la portée des revendications.

L'invention s'étend notamment aux systèmes dans lesquels le dispositif de fermeture ne comprend que des moyens de fermeture amont sans moyens de fermeture aval. Elle s'étend également aux systèmes dans lesquels la position des moyens de fermeture aval ne conditionne pas la position des moyens de fermeture amont et inversement.

L'invention s'étend aux systèmes dans lesquels le canal d'alimentation de la chambre peut être porté par la chambre mobile comme dans l'exemple illustré dans les figures 1 à 10. L'invention s'étend également aux systèmes dans lesquels le canal d'alimentation est porté par un élément du bâti ou par la demi-chambre fixe 22.

Dans l'exemple illustré et décrit en détail, les moyens de guidage 46 sont fixes par rapport au bâti et les moyens de fermeture amont 61 sont mobiles par rapport au bâti.

L'invention s'étend également aux systèmes dans lesquels les moyens de fermeture amont 61 sont fixes par rapport au bâti et les moyens de guidage 16 sont mobiles par rapport au bâti. Ainsi, la surface d'appui 462 est mobile en translation. Les zones d'appui 612, 613 sont alors fixes et forment par exemple chacune un rail sur lequel la dose 50 coulisse en étant entraînée par le déplacement de la surface d'appui 462 portée par les moyens de guidage 46.

L'invention s'étend à tout type de surface d'appui 462.

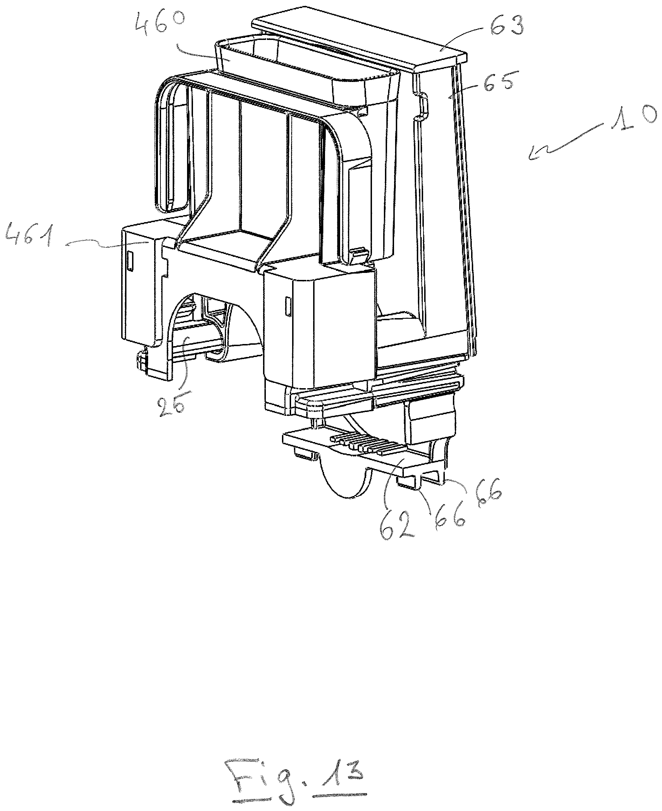

En alternative aux portions saillantes formant les zones de soutien 612, 613 illustrées sur les figures 13 à 19d, on pourra prévoir que ces zones de soutien soient formées par une seule surface plane présentant une ouverture agencée pour laisser pénétrer une dose 50' non adaptée. Cette ouverture peut ne pas être une fente et peut ne pas présenter un contour fermé.

La butée axiale peut être formée par tout type d'organe apte à entrer au contact de la dose 50' pour s'opposer au coulissement axial de celle-ci.

L'invention n'est pas limitée à un fonctionnement avec des doses carrées. Elle est agencée pour permettre la préparation d'une boisson et le fonctionnement du système avec toute dose ne présentant pas une portion qui se place au droit de la butée selon une direction axiale lorsque cette dose repose sur les moyens de fermeture amont 61.

En outre, l'invention permet d'empêcher l'utilisation de la machine avec une dose non adaptée en bloquant l'avancée de la dose 50' même si cette dernière ne présente pas de forme entièrement circulaire. Il suffit qu'une portion du pourtour présente une portion 54' qui se place au droit de la butée axiale selon l'axiale longitudinal 11.

L'invention n'est pas non plus limitée à un système dans lequel l'avancée de la dose dans le volume formant le volume d'infusion s'effectue par gravité. On peut en effet prévoir que le coulissement relatif de la première pièce soutenant la dose et la deuxième pièce mobile par rapport à la première amène la dose dans la position d'infusion en extrémité de course et sans que la dose ne tombe par gravité en fin de course. La butée axiale portée par la première pièce entre donc au contact de la dose si cette dernière n'est pas adaptée et bloque le coulissement de la dose avant qu'elle n'atteigne sa position d'infusion en fin de course. Il suffit donc que la butée axiale soit positionnée sur le trajet de coulissement de la dose.

La butée axiale est solidaire de la première pièce soutenant la dose. Pour autant, la butée axiale et les zones de soutien peuvent être formées par des pièces différentes. Cela pourra d'autant plus être le cas si la première pièce est solidaire du bâti.

**REFERENCES**

| | | | |
|---|---|---|---|
| 1. | Dose | 60. | Dispositif de fermeture |
| 10. | Système | 61. | Moyens de fermeture amont |
| 11. | Axe longitudinal | 611. | Première pièce |
| 12. | Sens avant | 612. | Zone d'appui |
| 13. | Sens arrière | 613. | Zone d'appui |
| 20. | Bâti | 614. | Fente |
| 22. | Demi-chambre fixe | 615. | Butée axiale |
| 24. | Conduit d'arrivée | 616. | Plan |
| 25. | Arbre | 617. | Première portion d'espace |
| 30. | Trappe | 618. | Deuxième portion d'espace |
| 40. | Vérin | 62. | Moyens de fermeture aval |
| 42. | Demi-chambre mobile | 621. | Organe de dévetissage |
| 44. | Deuxièmes moyens de dévêtissement | 622. | Surface de réception de la dose |
| 441. | Doigt de dévêtissement | 623. | Butée axiale de dévetissage |
| 442. | Ressort de dévêtissement | 63. | Moyens d'obstruction |
| 443. | Surface d'appui | 65. | Bras |
| 45. | Conduit d'évacuation | 66. | Butée |
| 46. | Moyens de guidage | 69. | Coulisseau |
| 460. | Trémie | 7. | Chambre |
| 461. | Deuxième pièce | 100. | Chambre de poussée |
| 462. | Surface d'appui | 101. | Surface de poussée |
| 463. | Surface de guidage latéral | 102. | Fond du vérin |
| 47. | Logement pour ressort | 103. | Moyens d'emmanchement |
| 50. | Dose | 104. | Canal d'alimentation |
| 51. | Volume contenant le produit à infuser | 105. | Passage |
| 52. | Pourtour de la dose | 106. | Ressort de retour |
| 53. | Portion rectiligne | 107. | Butée pour ressort de vérin |
| 54. | Portion de la dose pénétrant dans la fente | 108. | Entrée de fluide à infuser |
| 55. | Armature de la dose | 109. | Entrée de fluide de poussée |
| 56. | Congé de raccordement | 110. | Joints |
| 57. | Diamètre | 111. | Joints |

## Revendications

1. Système (10) de production de boisson à partir d'une dose (50) comprenant un produit à infuser et présentant un pourtour (52) le système (10) comprenant :
une première (611) et une deuxième (461) pièces présentant une mobilité relative en translation et définissant en partie au moins un ensemble de réception (611, 461) destiné réceptionner la dose (50) avant son positionnement dans une position d'infusion,
dans lequel, la première pièce (611) comporte au moins une zone de soutien (612, 613) configurée pour entrer au contact de la dose (50) de manière à soutenir la dose (50) dans une première position relative des première (611) et deuxième (461) pièces,
le système étant agencé de manière à ce que lors de la translation relative des première (611) et deuxième (461) pièces, la deuxième pièce (461) forme des moyens d'appui sur la dose (50) pour provoquer le coulissement axial de la dose (50) sur la au moins une zone de soutien (612, 613) de la première pièce (611) en vue de son positionnement dans la position d'infusion,
**caractérisé en ce que** le système (10) comporte également au moins une butée axiale (615), solidaire de la première pièce (611), disposée en dessous de ladite au moins zone de soutien (612, 613) selon une projection sur un plan vertical perpendiculaire à l'axe (11) de ladite translation, la butée axiale étant accessible depuis l'espace dans lequel la dose (50) est destinée à coulisser sur la au moins une zone de soutien (612, 613) de la première pièce (611) lors de la translation relative des première (611) et deuxième (461) pièces.

2. Système (10) selon la revendication précédente, comprenant la dose (50).

3. Système (10) selon l'une quelconque des revendications précédentes, dans lequel la butée axiale est verticalement accessible depuis l'espace dans lequel la dose (50) est destinée à coulisser sur la au moins une zone de soutien (612, 613) de la première pièce (611) lors de la translation relative des première (611) et deuxième (461) pièces.

4. Système (10) selon l'une quelconque des revendications précédentes, dans lequel la butée axiale (615) est agencée pour entrer au contact d'une dose (50') dont le pourtour (52') présenterait une portion (54') formant saillie vers le bas au-delà d'un plan horizontal (616) passant par la zone de soutien (612, 613), bloquant ainsi le coulissement d'une telle dose (50') par rapport à la première pièce (611).

5. Système (10) selon l'une quelconque des revendications précédentes, comprenant au moins une ouverture portée par la première pièce (611) et située verticalement sous la zone de soutien (612, 613), ladite ouverture donnant un accès, selon la verticale, à la butée axiale.

6. Système (10) selon l'une quelconque des revendications précédentes, comprenant au moins une ouverture portée par la première pièce (611) et située verticalement sous la zone de soutien (612, 613), ladite butée axiale étant dans formée par un contour de l'ouverture.

7. Système (10) selon l'une quelconque des revendications précédentes, comprenant au moins un volume ouvert situé verticalement sous la zone de soutien (612, 613), le volume ouvert étant conformé pour permettre l'accès à la butée axiale (615) depuis la zone de soutien, et dans lequel le volume ouvert est de préférence conformé pour pouvoir être pénétré par une dose (50') dont le pourtour (52) présente une portion (54') saillante vers le bas lorsque la dose (50) est dans l'ensemble de réception (611, 461).

8. Système (10) selon l'une quelconque des revendications précédentes, dans lequel la au moins une zone de soutien (612, 613) forme une butée verticale, bloquant le déplacement de la dose (50) sous l'effet de son poids, dans lequel la première pièce (611) comporte au moins deux zones de soutien (612, 613) et dans lequel les deux zones de soutien (612, 613) définissent un plan (616) sensiblement horizontal ainsi qu'une première (617) et une deuxième (618) portions d'espace situées respectivement au-dessus et en dessous dudit plan (616) selon une direction verticale et dans lequel la butée axiale (615) est disposée dans la deuxième portion d'espace (618) de manière à entrer au contact d'une portion de dose (50) pénétrant dans cette deuxième portion d'espace (618).

9. Système (10) selon la revendication précédente, dans lequel les deux zones de soutien (612, 613) forment deux parties en saillie s'étendant au-dessus d'un profil portant la butée axiale (615) selon une direction vertical.

10. Système (10) selon l'une quelconque des revendications précédentes, configuré de manière à ce qu'en fin de coulissement, la première pièce (611) soit escamotée, au moins en partie sous la deuxième pièce (461) selon une direction verticale de manière à ce que la dose (50) puisse se déplacer sous l'effet de la gravité.

11. Ensemble comprenant au moins une dose (50) comprenant un produit à infuser et présentant un pourtour (52) et un système (10) de production de boisson à partir d'une telle dose (50) selon la revendication 1, le système comprenant :
une première (611) et une deuxième (461) pièces présentant une mobilité relative en translation et définissant en partie au moins un ensemble de réception (611, 461) destiné réceptionner la dose (50) avant son positionnement dans une position d'infusion,
le système étant agencé de manière à ce que lors de la translation relative des première (611) et deuxième (461) pièces, la deuxième pièce (461) forme des moyens d'appui sur la dose (50) pour provoquer le coulissement de la dose (50) sur la au moins une zone de soutien (612, 613) de la première pièce (611) en vue de son positionnement dans la position d'infusion,
**caractérisé en ce que** le système comporte également au moins une butée axiale (615), solidaire de la première pièce (611), accessible depuis l'espace dans lequel la dose (50) est destinée à coulisser sur la au moins une zone de soutien (612, 613) de la première pièce (611) lors de la translation relative des première (611) et deuxième (461) pièces, le pourtour (52) de la dose (50) et la butée axiale (615) étant mutuellement agencées pour que la butée axiale (615) n'entre pas au contact du pourtour (52) de la dose (50) lorsque la dose (50) coulisse sur la première pièce (611), autorisant ainsi le libre coulissement de la dose (50) et son positionnement dans la position d'infusion.

12. Ensemble selon la revendication précédente dans lequel la butée axiale (615) et le pourtour (52) de la dose (50) présentent des formes complémentaires et agencées de manière à ce que la butée axiale (615) n'entre pas au contact de la dose (50) lorsque la dose (50) coulisse sur la première pièce (611).

13. Ensemble selon l'une quelconque des deux revendications précédentes dans lequel la butée axiale (615) est disposée en dessous de ladite au moins une zone de soutien (612, 613) selon une projection sur un plan vertical perpendiculaire à l'axe (11) de ladite translation.

14. Ensemble selon l'une quelconque des trois revendications précédentes dans lequel la première pièce (611) présente au moins deux zones de soutien (612, 613), au moins une ouverture située entre les deux zones de soutien (612, 613), une partie d'un contour de l'ouverture formant la butée axiale (615), dans lequel la dose (50) présente une armature définissant une portion au moins de son pourtour (52) et configurée pour prendre appui sur les deux zones de soutien (612, 613), et dans lequel l'armature présente une forme configurée pour ne pas pénétrer dans l'ouverture lorsqu'elle prend appui sur les deux zones de soutien (612, 613).

15. Ensemble selon l'une quelconque des quatre revendications précédentes dans lequel la dose (50) présente un pourtour (52) de forme polygonale et de préférence carré.

## Patentansprüche

1. System (10) zur Herstellung eines Getränks mithilfe einer Dosis (50) mit einem aufzubrühenden Produkt und einer Umrandung (52), wobei das System (10) folgendes umfasst:
ein erstes (611) und ein zweites (461) Teil, die eine relative translatorische Beweglichkeit aufweisen und zumindest teilweise eine Aufnahmeeinheit (611, 461) abgrenzen, die zur Aufnahme der Dosis (50) vor deren Positionierung in einer Brühposition bestimmt ist, in welcher das erste Teil (611) zumindest einen Stützbereich (612, 613) umfasst, der so gestaltet ist, dass er mit der Dosis (50) so in Berührung kommt, dass er die Dosis (50) in einer ersten Position in Bezug auf das erste (611) und das zweite (461) Teil stützt, wobei das System so angeordnet ist, dass während der relativen Translation des ersten (611) und zweiten (461) Teils das zweite Teil (461) Auflagemittel auf der Dosis (50) bildet, um die axiale Verschiebung der Dosis (50) auf dem zumindest einen Stützbereich (612, 613) des ersten Teils (611) im Hinblick auf dessen Positionierung in die Brühposition herbeizuführen, **dadurch gekennzeichnet, dass** das System (10) darüber hinaus zumindest einen axialen Anschlag (615) umfasst, der mit dem ersten Teil (611) verbunden ist und unterhalb des zumindest einen Stützbereichs (612, 613) in einer Projektion auf eine vertikale Ebene senkrecht zur Achse (11) der besagten Translation angeordnet ist, wobei der axiale Anschlag von dem Bereich aus zugänglich, in dem sich die Dosis (50) in dem zumindest einen Stützbereich (612, 613) des ersten Teils (611) während der relativen Translation des ersten (611) und des zweiten (461) Teils verschieben soll.

2. System (10) nach dem vorhergehenden Anspruch, welches die Dosis (50) umfasst.

3. System (10) nach einem der vorhergehenden Ansprüche, in welchem der axiale Anschlag senkrecht zugänglich ist von dem Bereich aus, in dem sich die Dosis (50) auf dem zumindest einen Stützbereich (612, 613) des ersten Teils (611) während der relativen Translation des ersten (611) und des zweiten (461) Teils verschieben soll.

4. System (10) nach einem der vorhergehenden Ansprüche, in welchen der axiale Anschlag (615) so angeordnet ist, dass er mit einer Dosis (50') in Berührung kommt, deren Umrandung (52') einen Abschnitt (54') aufweist, der nach unten über eine horizontale, den Stützbereich (612, 613) durchquerende Ebene (616) hinaus vorsteht, und somit das Verschieben einer solchen Dosis (50') in Bezug auf das erste Teil (611) blockiert.

5. System (10) nach einem der vorhergehenden Ansprüche, welches zumindest eine Öffnung umfasst, die von einem ersten Teil (611) getragen wird und sich senkrecht unter dem Stützbereich (612, 613) befindet, wobei besagte Öffnung in der Vertikalen Zugang zum axialen Anschlag gibt.

6. System (10) nach einem der vorhergehenden Ansprüche, welches zumindest eine Öffnung umfasst, die getragen wird durch das erste Teil (611) und sich senkrecht unter dem Stützbereich (612, 613) befindet, wobei besagter axialer Anschlag durch eine Umrandung der Öffnung gebildet wird.

7. System (10) nach einem der vorhergehenden Ansprüche, welches zumindest einen offenen Raum senkrecht unter dem Stützbereich (612, 613) umfasst, wobei der offene Raum so ausgebildet ist, dass der Zugang zum axialen Anschlag (615) vom Stützbereich aus möglich ist, und in dem der offene Raum vorzugsweise so ausgebildet ist, dass eine Dosis (50'), deren Umrandung (52) einen nach unten vorspringenden Abschnitt (54') aufweist, in ihn vordringen kann, wenn sich die Dosis (50) in der Aufnahmeeinheit (611, 461) befindet.

8. System (10) nach einem der vorhergehenden Ansprüche, in welchen der zumindest eine Stützbereich (612, 613) einen senkrechten Anschlag bildet, der das Verschieben der Dosis (50) unter Einwirkung ihres Gewichts blockiert, in welchem das erste Teil (611) zumindest zwei Stützbereiche (612, 613) umfasst und in welchen die beiden Stützbereiche (612, 613) eine im wesentlichen horizontale Ebene (616) sowie einen ersten (617) und einen zweiten (618) Raumabschnitt jeweils oberhalb und unterhalb der besagten Ebene (616) in einer senkrechten Richtung abgrenzen, und in dem der axiale Anschlag (615) im zweiten Raumabschnitt (618) so angeordnet ist, dass er mit einem Abschnitt der Dosis (50), welche in diesen zweiten Raumbereich (618) vordringt, in Berührung kommt.

9. System (10) nach dem vorhergehenden Anspruch, in welchem die beiden Stützbereiche (612, 613) zwei vorspringende Teile bilden, die sich oberhalb eines Profils, welches den axialen Anschlag (615) trägt, in einer vertikalen Richtung erstrecken.

10. System (10) nach einem der vorhergehenden Ansprüche, das so gestaltet ist, dass das erste Teil (611) am Ende der Verschiebung zumindest teilweise unter dem zweiten Teil (461) in einer vertikalen Richtung eingefahren ist, sodass sich die Dosis (50) unter Einwirkung der Schwerkraft verschieben kann.

11. Einheit, welche zumindest eine Dosis (50) mit einem zu überbrühenden Produkt und einer Umrandung (52) umfasst, und ein System (10) zur Herstellung eines Getränks mithilfe einer solchen Dosis (50), nach dem Anspruch 1 wobei das System folgendes umfasst:
ein erstes (611) und zweites (461) Teil, die eine relative translatorische Beweglichkeit aufweisen und zumindest teilweise eine Aufnahmeeinheit (611, 461) abgrenzen, die dazu bestimmt ist, die Dosis (50) vor deren Positionierung in eine Brühposition aufzunehmen, wobei das System so angeordnet ist, dass während der relativen Translation des ersten (611) und des zweiten (461) Teils das zweite Teil (461) Auflagemittel auf der Dosis (50) bildet, um die Verschiebung der Dosis (50) auf dem zumindest einen Stützbereich (612, 613) des ersten Teils (611) im Hinblick auf dessen Positionierung in die Brühposition herbeizuführen,
**dadurch gekennzeichnet, dass** das System darüber hinaus zumindest einen axialen Anschlag (615) umfasst, der mit dem ersten Teil (611) verbunden ist und zugänglich ist von dem Raum aus, in dem sich die Dosis (50) auf zumindest einem Stützbereich (612, 613) des ersten Teils (611) während der relativen Translation des ersten (611) und des zweiten (461) Teils verschieben soll, wobei die Umrandung (52) der Dosis (50) und der axiale Anschlag (615) so zueinander angeordnet sind, dass der axiale Anschlag (615) nicht mit der Umrandung (52) der Dosis (50) in Berührung kommt, wenn sich die Dosis (50) auf das erste Teil (611) verschiebt, um somit das freie Verschieben der Dosis (50) und deren Positionierung in der Brühposition zuzulassen.

12. Einheit nach dem vorhergehenden Anspruch, in welcher der axiale Anschlag (615) und die Kontur (52) der Dosis (50) einander ergänzende Formen aufweisen und so angeordnet sind, dass der axiale Anschlag (615) nicht mit der Dosis (50) in Berührung kommt, wenn sich die Dosis (50) auf das ersten Teil (611) verschiebt.

13. Einheit nach einem der beiden vorhergehenden Ansprüche, in welchen der axiale Anschlag (615) unterhalb des zumindest einen Stützbereichs (612, 613) gemäß einer Projektion auf einer vertikalen Ebene senkrecht zur Achse (11) besagter Translation angeordnet ist.

14. Einheit nach einem der drei vorhergehenden Ansprüche, in welchem das erste Teil (611) zumindest zwei Stützbereiche (612, 613) aufweist, zumindest eine Öffnung zwischen den beiden Stützbereichen (612, 613), einen Teil einer Umrandung der Öffnung, welche den axialen Anschlag (615) bildet, in dem die Dosis (50) einen Rahmen aufweist, der zumindest einen Abschnitt ihrer Umrandung (52) abgrenzt und so gestaltet ist, dass sie auf den beiden Stützbereichen (612, 613) aufliegt, und in dem der Rahmen eine Form aufweist, die so ausgebildet ist, dass sie nicht in die Öffnung vordringt, wenn sie auf den beiden Stützbereichen (612, 613) aufliegt.

15. Einheit nach einem der vier vorhergehenden Ansprüche, in welcher die Dosis (50) eine Umrandung (52) in vieleckiger, vorzugsweise viereckiger Form aufweist.

## Claims

1. A system (10) for producing beverages from a dose (50) of a product to be infused and having a periphery (52), said system (10) comprising:
a first (611) and a second (461) part having a relative mobility in translation and defining at least in part one receiving assembly (611, 461) intended to receive the dose (50) prior to the positioning thereof in a position of infusion,
wherein the first part (611) comprises at least one support zone (612, 613) so configured as to come into contact with the dose (50) so as to support the dose (50) in a first relative position of the first (611) and second (461) parts,
with the system being so arranged that during the relative translation of said first (611) and second (461) parts, the second part (461) forms means for bearing against the dose (50) to cause the axial sliding of the dose (50) on the at least one support zone (612, 613) of the first part (611) for the positioning thereof in the position of infusion,
**characterized in that** the system (10) also comprises at least one axial stop (615) integral with the first part (611), positioned below said at least one support zone (612, 613) in a projection on a vertical plane perpendicular to the axis (11) of said translation, with the axial stop being accessible from the space wherein the dose (50) is intended to slide on the at least one support zone (612, 613) of the first part (611) during the relative translation of the first (611) and second (461) parts.

2. A system (10) according to the preceding claim, comprising the dose (50).

3. A system (10) according to any one of the preceding claims, wherein the axial stop is vertically accessible from the space wherein the dose (50) is intended to slide on the at least one support zone (612, 613) of the first part (611) during the relative translation of the first (611) and second (461) parts.

4. A system (10) according to any one of the preceding claims, wherein the axial stop (615) is so arranged as to come into contact with one dose (50'), the periphery (52') of which would have a portion (54') projecting downwards beyond a horizontal plane (616) passing through the support zone (612, 613), thereby blocking the sliding of such a dose (50') relative to the first part (611).

5. A system (10) according to any one of the preceding claims, comprising at least one opening carried by the first part (611) and provided vertically below the support zone (612, 613), with said opening providing access, in the vertical direction, to the axial stop.

6. A system (10) according to any one of the preceding claims, comprising at least one opening carried by the first part (611) and provided vertically below the support zone (612, 613), with said axial stop being formed by a periphery of the opening.

7. A system (10) according to any one of the preceding claims, comprising at least one open volume positioned vertically below the support zone (612, 613), with the open volume being so configured as to give access to the axial stop (615) from the support zone, and wherein the open volume is preferably so designed as to be able to be penetrated by a dose (50'), the periphery (52) of which has a portion (54') projecting downwards when the dose (50) is in the receiving assembly (611, 461).

8. A system (10) according to any one of the preceding claims, wherein the at least one support zone (612, 613) forms a vertical stop, blocking the movement of the dose (50) under the effect of its own weight, wherein the first part (611) comprises at least two support zones (612, 613) and wherein the two support zones (612, 613) define a substantially horizontal plane (616) and first (617) and second (618) portions of space respectively located above and below said plane (616) in a vertical direction and wherein the axial stop (615) is positioned in the second space portion (618) so as to come in contact with a portion of a dose (50) penetrating into said second space portion (618).

9. A system (10) according to the preceding claim, wherein the two support zones (612, 613) form two projecting portions which extend above a profile provided with the axial stop (615) in a vertical direction.

10. A system (10) according to any one of the preceding claims, so configured that at the end of the sliding, the first part (611) is retracted at least partly under the second part (461) in a vertical direction, so that the dose (50) can move under the effect of gravity.

11. An assembly comprising at least one dose (50) comprising a product to be infused and having a periphery (52) and a system (10) for producing beverages from such a dose (50) according to claim 1, with the system comprising:
a first (611) and a second (461) part having a relative mobility in translation and defining at least in part one receiving assembly (611, 461) intended to receive the dose (50) prior to the positioning thereof in a position of infusion,
the system being so arranged that, during the relative translation of said first (611) and second (461) parts, the second part (461) forms means for bearing against the dose (50) to cause the sliding of the dose (50) on the at least one support zone (612, 613) of the first part (611) for the positioning thereof in the position of infusion,
**characterized in that** the system also comprises at least one axial stop (615) integral with the first part (611), accessible from the space wherein the dose (50) is intended to slide on the at least one support zone (612, 613) of the first part (611) during the relative translation of the first (611) and second (461) parts, with the periphery (52) of the dose (50) and the axial stop (615) being mutually so arranged that the axial stop (615) is not in contact with the periphery (52) of the dose (50) when the dose (50) slides on the first part (611), thus enabling the free sliding of the dose (50) and the positioning thereof in the position of infusion.

12. An assembly according to the preceding claim, wherein the axial stop (615) and the periphery (52) of the dose (50) have complementary shapes and are so arranged that the axial stop (615) does not come in contact with the dose (50) when the dose (50) slides on the first part (611) .

13. An assembly according to any one of the preceding two claims, wherein the axial stop (615) is positioned below said at least one support zone (612, 613) in a projection on a vertical plane perpendicular to the axis (11) of said translation.

14. An assembly according to any one of the preceding three claims, wherein the first part (611) has at least two support zones (612, 613), at least one opening situated between the two support zones (612, 613), a portion of a periphery of the opening forming the axial stop (615), wherein the dose (50) comprises a frame defining at least a portion of its periphery (52) and so configured as to bear against the two support zones (612, 613), and wherein the frame has a shape so configured as not to penetrate into the opening when it bears against the two support zones (612, 613).

15. An assembly according to any one of the preceding four claims, wherein the dose (50) has a periphery (52) having a polygonal and preferably a square shape.
